# EUROPEAN PATENT APPLICATION

(11) **EP 4 803 670 A1**
(43) Date of publication of application: **09.09.2026**
(21) Application number: 24897602.9
(22) Date of filing: 27.11.2024
(51) Int. Cl.: C25B 11/056, C25B 9/00, C25B 11/031

(54) **ELECTRODE CATALYST LAYER, INK, MEMBRANE ELECTRODE ASSEMBLY, WATER ELECTROLYSIS DEVICE, AND ORGANIC HYDRIDE ELECTROLYTIC SYNTHESIS DEVICE**

(30) Priority: 27.11.2023 JP 2023199869
(71) Applicant: Toppan Holdings Inc., Tokyo 110-0016 (JP)
(72) Inventor: INAGAWA, Yuri, Tokyo 110-0016 (JP); KATO, Shigemoto, Tokyo 110-0016 (JP); UENO, Masahiro, Tokyo 110-0016 (JP)
(74) Representative: Wagner & Geyer
(86) International application number: PCT/JP2024/042025
(87) International publication number: WO 2025/115918

(57) **Abstract**

An electrode catalyst layer comprises a catalyst, a proton-conductive or anion-conductive polymer electrolyte, and a polymeric fibrous material having a functional group capable of forming a hydrogen bond.

## Description

### Technical Field

The present disclosure relates to an electrode catalyst layer, an ink, a membrane electrode assembly, a water electrolysis device, and an organic hydride electrolytic synthesis device.

### Background Art

In recent years, a movement of using, as primary energy, hydrogen as CO₂-free energy that can be generated from various resources has been accelerating to achieve carbon neutrality. As a method for producing such hydrogen, there is a promising method in which water electrolysis is performed using renewable energy.

As a method for performing water electrolysis, alkaline water electrolysis and proton exchange membrane (PEM: Cation Exchange Membrane) type water electrolysis, anion exchange membrane (AEM: Anion Ion Exchange Membrane) type, and solid oxide type are generally known. Among them, PEM type water electrolysis is attracting attention as a method that enables the downsizing of water electrolysis devices through high-efficiency operation, and AEM type water electrolysis is attracting attention as a method from which a cost reduction with a base metal catalyst can be expected.

A PEM type water electrolysis device generally has a pair of main electrodes and a membrane electrode assembly provided therebetween, and the membrane electrode assembly has a proton-conductive solid polymer electrolyte membrane, a first electrode catalyst layer provided on one surface of the solid polymer electrolyte membrane, and a second electrode catalyst layer provided on the other surface of the solid polymer electrolyte membrane. An AEM type water electrolysis device also has the same structure in which an anion-conductive electrolyte membrane is used and has the same membrane electrode assembly.

The electrode catalyst layer is formed on a surface of a proton-conductive or anion-conductive electrolyte membrane using, for example, a coating method (see Patent Literature 1 below).

In addition, organic hydride electrolytic synthesis devices are attracting attention as transport carriers of hydrogen as renewable energy. As an example of the organic hydride electrolytic synthesis device, an organic hydride electrolytic synthesis device having, similar to water electrolysis devices, a pair of main electrodes and a membrane electrode assembly provided therebetween is known. The membrane electrode assembly has a proton-conductive solid polymer electrolyte membrane, a first electrode catalyst layer provided on one surface of the solid polymer electrolyte membrane, and a second electrode catalyst layer provided on the other surface of the solid polymer electrolyte membrane (see Patent Literature 2 below).

### Citation List

### Patent Literature

[Patent Literature 1] Japanese Unexamined Patent Application No. 2019-83085
[Patent Literature 2] International Publication No. WO 2022/091361

### Summary of Invention

### Technical Problem

However, in conventional electrode catalyst layers, there is room for improvement in achieving both suppressing variation in the amount of a catalyst supported and suppressing the generation of cracks (first problem).

In addition, in conventional electrode catalyst layers, there is also room for improvement in achieving both lowering the electrolysis voltage required for water electrolysis or organic hydride electrolytic synthesis and suppressing the generation of cracks (second problem).

A part of the present disclosure has been made in view of the first problem described above, and an object is to provide an electrode catalyst layer and the like capable of suppressing the generation of cracks and/or suppressing variation in the amount of a catalyst supported.

Another part of the present disclosure has been made in view of the second problem described above, and an object is to provide an electrode catalyst layer and the like capable of lowering the electrolysis voltage and suppressing the generation of cracks.

### Solution to Problem

As a result of repeating diligent research, the present inventors found that the first problem can be solved by adding a specific polymeric fibrous material to ink for forming an electrode catalyst layer and reached the present disclosure.
[1] An electrode catalyst layer for water electrolysis or organic hydride electrolytic synthesis, comprising: a catalyst; a proton-conductive or anion-conductive polymer electrolyte; and a polymeric fibrous material having a functional group capable of forming a hydrogen bond.
[2] The electrode catalyst layer according to [1], wherein the polymeric fibrous material contains the functional group capable of forming a hydrogen bond in a repeating unit.
[3] The electrode catalyst layer according to [1] or [2], wherein the functional group capable of forming a hydrogen bond is a hydroxyl group and/or a N-H bond.
[4] The electrode catalyst layer according to any one of [1] to [3], wherein the polymeric fibrous material is a cellulose-based nanofiber.
[5] The electrode catalyst layer according to any one of [1] to [4], wherein the specific gravity of the catalyst is 5 or more.
[6] The electrode catalyst layer according to any one of [1] to [5], wherein the polymeric fibrous material has an average fiber diameter of 3 to 20 nm.
[7] The electrode catalyst layer according to any one of [1] to [6], wherein a content of the polymeric fibrous material is 1 to 12 parts by mass relative to 100 parts by mass of the catalyst.
[8] The electrode catalyst layer according to any one of [1] to [7], wherein the electrode catalyst layer has a shear strength of 0.08 N/mm or more.
[9] An ink for water electrolysis or organic hydride electrolytic synthesis, comprising: a catalyst; a proton-conductive or anion-conductive polymer electrolyte; and a polymeric fibrous material having a functional group capable of forming a hydrogen bond.
[10] The ink according to [9], wherein the polymeric fibrous material contains the functional group capable of forming a hydrogen bond in a repeating unit.
[11] The ink according to [9] or [10], wherein the functional group capable of forming a hydrogen bond is a hydroxyl group and/or a N-H bond.
[12] The ink according to any one of [9] to [11], wherein the specific gravity of the catalyst is 5 or more.
[13] The ink according to any one of [9] to [12], wherein a viscosity at a shear rate of 1 s⁻¹ measured with a rheometer is 500 to 5000 mPa·s.
[14] The ink according to any one of [9] to [12], wherein a viscosity at a shear rate of 1 s⁻¹ is 30 to 12000 mPa·s, and a TI value defined by (the viscosity at the shear rate of 1 s⁻¹)/(a viscosity at a shear rate of 1000 s⁻¹) is 2 to 100(-).
[15] A membrane electrode assembly for water electrolysis or organic hydride electrolytic synthesis, comprising: a polymer electrolyte membrane; and an electrode catalyst layer disposed on one side or both sides of the polymer electrolyte membrane,
   wherein the electrode catalyst layer is the electrode catalyst layer according to any of [1] to [8].
[16] The membrane electrode assembly according to [15], wherein the electrode catalyst layer is the electrode catalyst layer according to [8].
[17] A water electrolysis device, comprising: a membrane electrode assembly having a polymer electrolyte membrane and a pair of electrode catalyst layers disposed on both sides of the polymer electrolyte membrane, respectively; and
   a pair of current collectors provided to sandwich the membrane electrode assembly,
   wherein at least one of the pair of electrode catalyst layers is the electrode catalyst layer according to any one of [1] to [8].
[18] An organic hydride electrolytic synthesis device, comprising: a membrane electrode assembly having a polymer electrolyte membrane and a pair of electrode catalyst layers disposed on both sides of the polymer electrolyte membrane, respectively; and
   a pair of current collectors provided to sandwich the membrane electrode assembly,
   wherein at least one of the pair of electrode catalyst layers is the electrode catalyst layer according to any one of [1] to [8].

As a result of repeating diligent research, the present inventors found that the second problem can be solved by specifying the configuration of voids in an electrode catalyst layer containing a polymeric fibrous material and reached the present disclosure.

[B1] An electrode catalyst layer, comprising: a catalyst; a proton-conductive or anion-conductive polymer electrolyte; and a polymeric fibrous material,
wherein a proportion of an area of voids in a cross section of the electrode catalyst layer is 20% or more and 40% or less, and
in a Voronoi diagram in which the center of gravity of each void in the cross section of the electrode catalyst layer is regarded as a site, when a standard deviation of areas of Voronoi regions is indicated by ASD, and an arithmetic average area of the Voronoi regions is indicated by AAV, a dispersity of the areas of the Voronoi regions represented by ASD/AAV is 0.50 or more and 0.90 or less.

[B2] The electrode catalyst layer according to [B1], wherein in the cross section of the electrode catalyst layer, in a Voronoi diagram in which the centers of gravity of the fibers of the polymeric fibrous material are regarded as sites, when a standard deviation of areas of Voronoi regions is indicated by BSD, and an arithmetic average area of the Voronoi regions is indicated by BAV, a dispersity of the areas of the Voronoi regions represented by BSD/BAV is 1.5 or less.

[B3] The electrode catalyst layer according to [B1] or [B2], wherein in the cross section of the electrode catalyst layer, a proportion of an area of the polymeric fibrous material is 2% or more and 15% or less.

[B4] The electrode catalyst layer according to any one of [B1] to [B3], wherein the polymeric fibrous material has an average fiber diameter of 3 to 20 nm.

[B5] The electrode catalyst layer according to any one of [B1] to [B4], wherein a content of the polymeric fibrous material is 10 parts by mass or less relative to 100 parts by mass of the catalyst.

[B6] The electrode catalyst layer according to any one of [B1] to [B5], wherein the polymeric fibrous material has a hydrogen-bonding functional group.

[B7] The electrode catalyst layer according to any one of [B1] to [B6], wherein the polymeric fibrous material has a hydrogen-bonding functional group in a repeating unit.

[B8] The electrode catalyst layer according to any one of [B1] to [B7], wherein the polymeric fibrous material is a cellulose-based nanofiber.

[B9] The electrode catalyst layer according to any one of [B1] to [B8], wherein the electrode catalyst layer has a shear strength is 0.08 N/mm or more.

[B10] The electrode catalyst layer according to any one of [B1] to [B9] that is for water electrolysis or organic hydride electrolytic synthesis.

[B11] A membrane electrode assembly for water electrolysis or organic hydride electrolytic synthesis, comprising: an electrolyte membrane; and the electrode catalyst layer according to any one of [B1] to [B10] disposed on one side or both sides of the electrolyte membrane.

[B12] A water electrolysis device, comprising: a membrane electrode assembly having a polymer electrolyte membrane and a pair of electrode catalyst layers disposed on both sides of the polymer electrolyte membrane, respectively; and
a pair of current collectors provided to sandwich the membrane electrode assembly,
wherein at least one of the pair of electrode catalyst layers is the electrode catalyst layer according to any one of [B1] to [B11].

[B13] An organic hydride electrolytic synthesis device, comprising: a membrane electrode assembly having a polymer electrolyte membrane and a pair of electrode catalyst layers disposed on both sides of the polymer electrolyte membrane, respectively; and
a pair of current collectors provided to sandwich the membrane electrode assembly,
wherein at least one of the pair of electrode catalyst layers is the electrode catalyst layer according to any one of [B1] to [B11].

### Advantageous Effects of Invention

According to an aspect of the present disclosure, an electrode catalyst layer, an ink, and the like that are capable of both suppressing variation in an amount supported in the electrode catalyst layer and suppressing the generation of cracks are provided.

According to another aspect of the present disclosure, an electrode catalyst layer and the like that are capable of both lowering the electrolysis voltage and suppressing the generation of cracks are provided.

### Brief Description of Drawings

FIG. 1 is a cross-sectional view showing an embodiment of a membrane electrode assembly of the present disclosure.
FIG. 2 is a view schematically and partially showing an example of an electrode catalyst layer in FIG. 1.
FIG. 3 is a cross-sectional view showing an example of a catalyst in FIG. 2.
FIG. 4 is a cross-sectional view showing an embodiment of a water electrolysis device and organic hydride electrolytic synthesis device of the present disclosure.

### Description of Embodiment

Hereinafter, embodiments of the present disclosure will be described in detail.

### (First embodiment)

### <Membrane electrode assembly for water electrolysis or organic hydride electrolytic synthesis 200>.

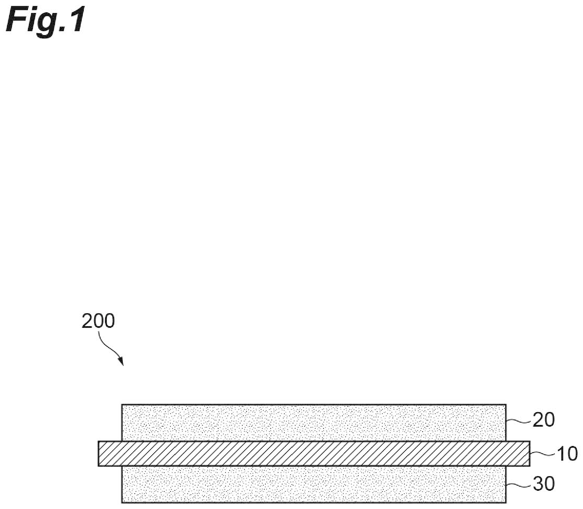

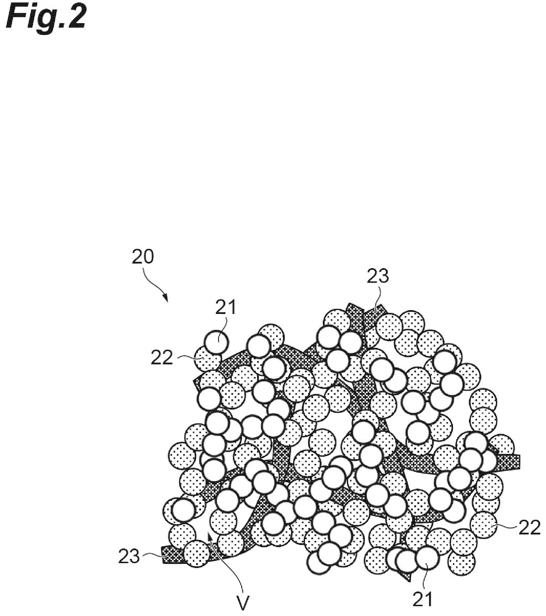

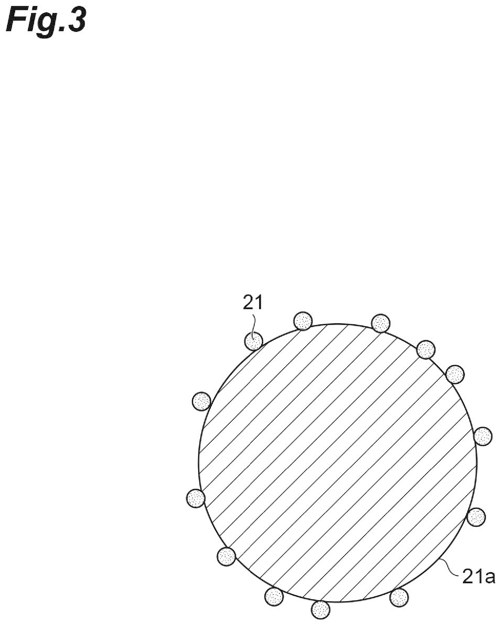

First, an embodiment of a membrane electrode assembly for water electrolysis or organic hydride electrolytic synthesis 200 of the present disclosure will be described with reference to FIGS. 1 to 3. FIG. 1 is a cross-sectional view showing an embodiment of the membrane electrode assembly for water electrolysis or organic hydride electrolytic synthesis 200 of the present disclosure, FIG. 2 is a view schematically and partially showing an example of an electrode catalyst layer 20 in FIG. 1, and FIG. 3 is a cross-sectional view showing an example of a catalyst in the electrode catalyst layer 20 in FIG. 2.

As shown in FIG. 1, the membrane electrode assembly for water electrolysis or organic hydride electrolytic synthesis 200 has a polymer electrolyte membrane 10, an electrode catalyst layer 20 provided on one surface of the polymer electrolyte membrane 10, and an electrode catalyst layer 30 provided on the other surface of the polymer electrolyte membrane 10.The electrode catalyst layer 20 includes a catalyst 21, a polymer electrolyte 22, and a fibrous material 23 (see FIG. 2).

Hereinafter, the polymer electrolyte membrane 10 and the electrode catalyst layer 20 will be described in more detail.

### (Polymer electrolyte membrane 10)

The polymer electrolyte membrane 10 is a proton-conductive polymer electrolyte membrane in PEM (proton exchange membrane) type water electrolysis device and organic hydride electrolytic synthesis device. The proton-conductive polymer electrolyte has a proton-conductive functional group. Examples of the proton-conductive functional group are a sulfo group (-SO₃H), a phosphonic acid group (-PO₃H₂), and a carboxyl group (-COOH), and the proton-conductive functional group may be in a form of a salt of a metal or the like.

As specific examples of the proton-conductive polymer electrolyte membrane, a fluorine-based polymer electrolyte membrane or a hydrocarbon-based polymer electrolyte membrane can be used. As the fluorine-based polymer electrolyte membrane, it is possible to use, for example, Nafion (registered trademark) manufactured by DuPont de Nemours, Inc., Flemion (registered trademark) manufactured by AGC Inc., Aciplex (registered trademark) manufactured by Asahi Kasei Corporation, Gore Select (registered trademark) manufactured by W. L. Gore & Associates, and the like. As the hydrocarbon-based polymer electrolyte membrane, it is possible to use, for example, polymer electrolyte membranes such as sulfonated polyetherketone, sulfonated polyethersulfone, sulfonated polyether ether sulfone, sulfonated polysulfide, and sulfonated polyphenylene.

The polymer electrolyte membrane 10 is an anion-conductive polymer electrolyte membrane in an AEM (anion exchange membrane type) type water electrolysis device. The anion-conductive polymer electrolyte has an anion-conductive functional group. A typical specific example of the anion conductivity is hydroxide ion (OH⁻) conductivity.

Examples of the anion-conductive functional group are ammonium groups such as quaternary ammonium groups (NR₄⁺); primary to tertiary amino groups; phosphonium groups such as quaternary phosphonium groups (PR₄⁺); and sulfonium groups such as tertiary sulfonium groups (SR₃⁺); and the anion-conductive functional group may be in a form of a salt of a metal or the like. R is an organic group such as an alkyl group or an aryl group.

Examples of the quaternary ammonium groups are a trimethylammonium group, an imidazolium group, a pyridinium group, and the like. An example of the amino groups is a dimethylamino group.

Examples of commercially available anion exchange membranes include A201, A901 (both manufactured by Tokuyama Corporation); fumasep (trademark) FAA (for example, FAB-3, FAA-3-50, FAA-3-PK-130, and FAA-3-PP-75), FAB (all manufactured by FUMATECH BWT GmbH); Sustainion (trademark) 37-50 (manufactured by Dioxide Materials); NEOSEPTA (registered trademark) ACM, AM-1, ACS, ACLE-5P, AHA, AMH, (all manufactured by ASTOM Corporation); SELEMION (registered trademark) AMT, DSV, AAV, ASV, AHT, APS (all manufactured by AGC Inc.); Aciplex (registered trademark) A-501, A-231, A-101 (all manufactured by Asahi Kasei Corporation), PiperION (trademark) A20-HCO₃, A40-HCO₃, A80-HCO₃ (all manufactured by Versogen), and the like.

The thickness of the polymer electrolyte membrane 10 is not particularly limited, but is usually 20 to 250 µm and preferably 20 to 80 µm. When the thickness of the polymer electrolyte membrane 10 is within the above-described range, it is possible to maintain the mechanical durability of the polymer electrolyte membrane 10 and to reduce proton resistance (anion resistance) to enhance electrolysis performance.

### (Electrode catalyst layer 20)

The electrode catalyst layer 20 includes a catalyst 21, a polymer electrolyte 22, and a fibrous material 23.

### (1) Catalyst

The catalyst 21 includes catalysts that cause a reaction that generates oxygen from water at the anode (anode) of a water electrolysis device or organic hydride electrolytic synthesis device (also described as anode catalysts), catalysts responsible for a reaction that generates hydrogen from water at the cathode (cathode) of a water electrolysis device (also described as cathode catalysts), or catalysts that cause the hydrogenation of an organic compound at the cathode (cathode) of an organic hydride electrolytic synthesis device (also described as cathode catalysts).

As the anode catalysts, metals included in the platinum group, metals not included in the platinum group, or alloys, oxides, mixed oxides, or carbides of these metals can be used. Each of these can be used singly or two or more thereof can be used in combination.

Among the anode catalysts, ruthenium, rhodium, palladium, iridium, platinum, and alloys containing at least one of these, and oxides of these are suitable due to high catalytic activities.

For example, iridium (Ir), platinum (Pt), rhodium (Rh), palladium (Pd), nickel (Ni), oxides thereof (IrOₓ, RuOₓ, PdOₓ, and NiOₓ), alloys of iridium (Ir) and ruthenium (Ru), alloys of iridium (Ir) and titanium dioxide (TiO₂) are suitably used.

Particularly, IrOₓ is in wide use due to its outstanding catalytic activity.

Other preferable examples of the anode catalysts include composite oxides of cobalt and copper (for example, CuCoO₃, CuCoOₓ (x is a real number depending on the average oxidation number of a metal element), CuxCo₃₋ₓO₄ (x is a real number of 0 < x < 3), Cu_{0.7}Co_{2.3}O₄ and the like); composite oxides of nickel and cobalt (for example, NiCo₂O₄ and the like); catalysts obtained by doping iron into a composite oxide of nickel and cobalt (NiCoOₓ:Fe (x is a real number depending on the average oxidation number of a metal element)); composite oxides of nickel and iron (for example, NiFe₂O₄ and the like); composite oxides of ruthenium and lead (for example, Pb₂Ru₂O_{6.5} and the like); composite oxides of manganese, iron, and cerium (for example, Ce_{0.2}MnFe_{1.8}O₄ and the like); Ni-Fe alloys; Ni-Al alloys, and the like.

In addition, as the cathode catalysts, it is possible to preferably employ, for example, precious metals such as platinum, palladium, ruthenium, iridium, rhodium, and osmium, base metals such as nickel, cobalt, molybdenum, or manganese, or oxides of these precious metals or base metals. Other preferable examples of the cathode catalysts include platinum (for example, platinum supported on carbon (Pt/C), Pt black, and the like), nickel supported on cerium dioxide and lanthanum (III) oxide supported on activated carbon (Ni/CeO₂-La₂O₃/C), Ni-Mo alloy, Ni-Fe-Co alloys, Ni-Al-Mo alloys, and the like.

The catalyst is usually particulate. The average particle diameter of the primary particles of the particulate catalyst is preferably 100 nm or less and more preferably 50 nm or less. In this case, the activity of the catalyst further improves. The average particle diameter is the arithmetic average of the equivalent area diameters of 20 particles in an SEM image. In a case where the catalyst is supported on a conductive carrier as described below, the average particle diameter of the carrier is preferably 100 nm or less and more preferably 50 nm or less.

The specific gravity of the catalyst (or a catalyst-supported carrier in a case where the catalyst is supported on a carrier) is not particularly limited, but is suitably 5 or more. The specific gravity of the catalyst or catalyst-supported carrier refers to a value obtained by dividing the true density of the catalyst or catalyst-supported carrier by the density of water.

For example, the specific gravity of iridium oxide is 11.7.

In the case of using a metal catalyst or oxide catalyst having a large specific gravity, sedimentation of a catalyst ink is likely to occur, the amount supported becomes irregular during long-term production, additionally, a problem of cracks being generated due to a low viscosity is likely to occur, and the effect in the present embodiment may become enhanced.

The catalyst 21 may be supported on a conductive carrier 21a as shown in FIG. 3. The carrier 21a needs to be a conductive material capable of supporting the catalyst 21 without being eroded by the catalyst 21. As such a carrier 21a, carbon, TiO₂, Ti, SnO₂, and Sn are often used. The average particle diameter of the carrier is preferably 10 nm or more. In this case, an electron conduction path is likely to be formed. Here, from the viewpoint of decreasing the resistance value of the electrode catalyst layer 30 and increasing the amount of the catalyst supported, the average particle diameter of the carrier is preferably 1000 nm or less and more preferably 100 nm or less. Here, the average particle diameter is the arithmetic average of the equivalent area diameters of 20 particles in an SEM image.

In the present embodiment, it is suitable that the catalyst 21 is not supported on the carrier 21a. In such a case, the catalyst is likely to settle in the ink, variation in the amount of the catalyst supported in the electrode catalyst layer is likely to be problematic, and the effect of the present embodiment becomes enhanced.

### (2) Polymer electrolyte

The polymer electrolyte 22 is a proton-conductive or anion-conductive polymer electrolyte. These have been described in the section of the polymer electrolyte membrane and will be thus not described again.

The polymer electrolyte 22 is capable of functioning as a binder that bonds between the catalysts 21, between the polymeric fibrous materials 23, and between the catalyst 21 and the polymeric fibrous material 23. In addition, the polymer electrolyte is capable of functioning as a binder that bonds at least one of the catalyst 21 and the polymeric fibrous material 23 to the polymer electrolyte membrane 10.

The polymer electrolyte 22 may be the same polymer electrolyte as the polymer electrolyte membrane 10 or may be a polymer electrolyte different from the polymer electrolyte membrane 10. However, considering the interfacial resistance at the interface between the polymer electrolyte membrane 10 and the electrode catalyst layer 20, and the dimensional change rate in the polymer electrolyte membrane 10 and the electrode catalyst layer 20 in a case where the humidity changes, the polymer electrolyte in the polymer electrolyte membrane 10 and the polymer electrolyte 22 in the electrode catalyst layer 20 are preferably the same electrolyte as each other or polymer electrolytes having thermal expansion coefficients close to each other.

For example, in the case of enhancing the adhesion between the electrode catalyst layer 20 and the polymer electrolyte membrane 10, when the constituent material of the polymer electrolyte 22 is a fluorine-based polymer electrolyte, the constituent material of the polymer electrolyte membrane 10 is also preferably a fluorine-based polymer electrolyte. In addition, when the constituent material of the polymer electrolyte 22 is a hydrocarbon-based polymer electrolyte, the constituent material of the polymer electrolyte membrane 10 is also preferably a hydrocarbon-based polymer electrolyte, and when the constituent material of the polymer electrolyte 22 is a hydroxide ion-conductive polymer electrolyte, the constituent material of the polymer electrolyte membrane 10 is also preferably a hydroxide ion-conductive polymer electrolyte.

The amount of the polymer electrolyte 22 blended is preferably 10 to 100 parts by mass and more preferably 10 to 30 parts by mass relative to 100 parts by mass of the catalyst. In this case, since a structure in which the polymeric fibers intertwine together is suitably formed, the strength of the electrode catalyst layer 20 is further increased, and the generation of cracks can be further suppressed.

In a case where the catalyst 21 contains the carrier 21b, the polymeric fiber may be within a range of 1 part by mass or more and 100 parts by mass or less based on the carrier 21b in the catalyst 21 (100 parts by mass).

### (3) Polymeric fibrous material

The polymeric fibrous material 23 has a functional group capable of forming a hydrogen bond. The polymeric fibrous material 23 suitably has a functional group capable of forming a hydrogen bond in a repeating unit.

"Being capable of forming a hydrogen bond" means being capable of forming hydrogen bonds with other functional groups.

The functional group capable of forming a hydrogen bond may function as a hydrogen bond donor or may function as a hydrogen bond acceptor.

Examples of the functional group that functions as a hydrogen bond donor are a hydroxyl group (-OH) and a N-H bond. In these functional groups, since oxygen or nitrogen that directly bonds to hydrogen is rich in electrons, a hydrogen atom functions as a hydrogen bond donor.

Examples of the functional group that functions as a hydrogen bond acceptor are functional groups having an oxygen atom such as a carbonyl group (>C=O), a group having an ether bond (-O-), a group having an ester bond (-COO-), a hydroxyl group (-OH); functional groups having a nitrogen atom such as an amino group (-NH₂), and an amide group (-CO-NH₂); and functional groups having a fluorine atom such as -CF₃. In these functional groups, since the oxygen, nitrogen, or fluorine atoms, which are rich in electrons, are bonding to hydrogen, the oxygen, nitrogen, and fluorine atoms function as hydrogen bond acceptors.

The hydroxyl group and the N-H bond are capable of playing a role of both a hydrogen bond donor and a hydrogen bond acceptor.

From the viewpoint of promoting the formation of a hydrogen bond between the fibers of the polymeric fibrous material, the functional group capable of forming a hydrogen bond is preferably a hydroxyl group and/or a N-H bond, or a combination of the functional group that functions as a donor and the functional group that functions as an acceptor.

When the polymeric fibrous material 23 contains the functional group capable of forming a hydrogen bond in the molecular structure of the material, the polymeric fibrous material is capable of forming a three-dimensional network structure in the electrode catalyst layer by the hydrogen bond and the physical fiber intertwining, cracks are less likely to be generated, and the durability of the electrode catalyst layer 20 becomes high.

Furthermore, it is possible for the hydrogen-bonding functional group of the polymeric fibrous material 23 and the oxygen atom or the like in the proton-conductive functional group or the N atom, the H atom, or the like in the anion-conductive functional group of the polymer electrolyte 22 to bond to each other with a hydrogen bond, the polymer electrolyte 22 is likely to be present around the polymeric fibrous material 23, and it is possible to help the formation of a proton conduction path.

Specific examples of such a polymeric fibrous material include cellulosic nanofibers, chitin nanofibers, and chitosan nanofibers. The polymeric fibrous material that can be dispersed in water, an alcohol, or the like is suitable.

Examples of the cellulosic nanofibers are cellulose nanofibers having hydroxy groups that are not substituted; cellulose nanofibers having hydroxy groups, at least some of which have been substituted with any of carboxyl groups, acetyl groups or derivatives thereof, and carboxymethyl groups; sulfonated cellulose nanofibers; cellulose sulfate nanofibers; cellulose phosphate nanofibers: and cellulose nanofibers having hydroxy groups, at least some of which have been substituted with C1-C10 alkyl groups or derivatives thereof, and any combination of two or more of these may also be used. The cellulosic nanofibers may be cellulosic nanofibers having hydroxy groups that are not substituted.

The shape of the fibrous material 23 is not particularly limited and may be, for example, a hollow structure or a solid structure. The fibrous material 23 in the electrode catalyst layer 20 may be only one type of the above-described examples or a combination of two or more types thereof.

The average fiber diameter of the fibrous material 23 is not particularly limited, but is preferably 3 nm or more, more preferably 5 nm or more and is preferably 100 nm or less, more preferably 50 nm or less, and even more preferably 20 nm or less. In this case, a thickening effect and an effect of further suppressing the generation of cracks in the electrode catalyst layer 20 can be obtained with a smaller amount of the fibrous material added. In addition, it is also possible to improve the adhesion between the polymer electrolyte membrane 10 and the electrode catalyst layer 20. Therefore, the generation of voids due to peeling between the polymer electrolyte membrane 10 and the electrode catalyst layer 20 can be suppressed, and an increase in resistance of the membrane electrode assembly arising from these voids can be further suppressed. According to what has been described above, the membrane electrode assembly makes it possible to further suppress the degradation of water electrolysis performance.

The average fiber diameter of the fibrous material 23 refers to the average value of diameters measured for the cross sections of the exposed fibrous material 23 when a cross section of the electrode catalyst layer 20 is observed using a scanning electron microscope (SEM). In a case where the fibrous material 23 is cut at an angle with respect to the major axis, an elliptical cross section is obtained, and in such a case, the diameter refers to the diameter of a true circle fitted along the minor axis of the ellipse. In addition, in a case where the cross section of the electrode catalyst layer 20 is observed using SEM, the surface of the fibrous material 23 may be exposed instead of the cross section of the fibrous material 23. In that case, the diameter refers to the width of the fiber perpendicular to the major axis of the exposed fibrous material 23. The average fiber diameter of the fibrous material 23 refers to the arithmetic average value of the fiber diameters measured in the same manner at at least 20 observation points.

As a method for exposing the cross section of the electrode catalyst layer 20, it is possible to use a known method, for example, ion milling, ultramicrotome, or the like.

The average fiber length of the fibrous material 23 is not particularly limited, but is preferably 1 µm or longer, more preferably 2 µm or longer, even more preferably 3 µm or longer, and far even more preferably 4 µm or longer. In this case, the fibrous material 23 intertwines together, forming voids of an appropriate size in the electrode catalyst layer 20, and the mechanical characteristics of the electrode catalyst layer 20 can be improved. However, the average fiber length of the fibrous material 23 is preferably 100 µm or shorter and more preferably 40 µm or shorter.

The average fiber length of the fibrous material 23 is defined as the arithmetic average value of the fiber lengths obtained by measuring at least 10 fibers of the fibrous material 23. The average fiber length of the fibrous material 23 in the electrode catalyst layer 20 can be obtained by measuring the particle size distribution using a solution obtained by dissolving the electrode catalyst layer 20 in a solvent.

The amount of the polymeric fibrous material blended is preferably 1 part by mass or more and 12 parts by mass or less and more preferably 2 parts by mass or more and 10 parts by mass or less relative to 100 parts by mass of the catalyst. In this case, since a structure in which the polymeric fibers intertwine together is suitably formed, the strength of the electrode catalyst layer 20 is further increased, and the generation of cracks can be further suppressed.

In a case where the catalyst 21 is supported on the carrier 21b, the polymeric fiber may be within a range of 1 part by mass or more and 20 parts by mass or less based on the carrier 21b in the catalyst 21 (100 parts by mass).

### (Thickness of electrode catalyst layer 20)

The thickness of the electrode catalyst layer is preferably 1 µm or more and 10 µm or less. In a case where the thickness is thicker than 10 µm, cracks are likely to be generated. In addition, in a case where the thickness is thinner than 1 µm, the layer thickness is likely to vary, and a catalytic substance and the polymer electrolyte (ionomer) are likely to be nonuniform. Cracks in the surface of the electrode catalyst layer and the nonuniformity of the thickness and the material adversely affect the durability when the electrode catalyst layer is operated for a long period of time.

The thickness of the electrode catalyst layer 20 can be measured by, for example, observing the cross section of the membrane electrode assembly using a scanning electron microscope (SEM). For example, the thickness of the electrode catalyst layer can be measured by measuring the thickness of the electrode catalyst layer in a field of view where the entire catalyst layer is included at an observation magnification of approximately 1000 times to 10000 times. In order to ascertain the thickness without bias, the thickness is preferably measured in the same manner in at least 20 observation points. As a method for exposing the cross section of the membrane electrode assembly, it is possible to use a known method, for example, ion milling, ultramicrotome, or the like.

### (Shear strength of electrode catalyst layer 20)

The shear strength of the electrode catalyst layer can be 0.08 N/mm or more, and may be 0.09 N/mm or more. While there is no particular upper limit, the upper limit may be 1.0 N/mm or less and may be 0.50 N/mm or less.

The shear strength of the electrode catalyst layer is a force per unit length observed in a case where a portion up to a depth of 1 µm from the surface of the electrode catalyst layer is cut by moving a diamond blade at a rate of 10 µm/sec in the in-plane direction of the layer. The width of the diamond blade is set to 1 mm, the rake angle is set to 20°, and the clearance angle is set to 10°.

### (Electrode catalyst layer 30)

The electrode catalyst layer 30 is provided to sandwich the polymer electrolyte membrane 10 together with the electrode catalyst layer 20. The electrode catalyst layer 30 is not particularly limited as long as the electrode catalyst layer has a catalyst, but suitably further contains a polymer electrolyte and a fibrous material. As for the catalyst, the polymer electrolyte, and the composition ratio, those exemplified in the section of the electrode catalyst layer 20 can be used.

The electrode catalyst layer 30 may contain the catalyst, the polymer electrolyte, and a polymeric fibrous material having a functional group capable of forming a hydrogen bond as in the electrode catalyst layer 20, but may not contain the polymeric fibrous material.

### <Method for manufacturing membrane electrode assembly>

A method for manufacturing the membrane electrode assembly 200 includes an ink preparation step of preparing an ink and an electrode catalyst layer formation step of applying the ink to one surface of the polymer electrolyte membrane 10 to form the electrode catalyst layer 20.

### <Ink preparation step>

In the ink preparation step, a catalyst ink is prepared by mixing the individual constituent components of the electrode catalyst layer 20, that is, the catalyst 21, the polymer electrolyte 22, and the polymeric fibrous material 23 having a functional group capable of forming a hydrogen bond in the presence of a dispersion medium. That is, the ink contains the catalyst, the polymer electrolyte, the polymeric fibrous material having a functional group capable of forming a hydrogen bond, and the dispersion medium.

The dispersion medium of the ink is not particularly limited as long as the dispersion medium does not erode the individual constituent components of the electrode catalyst layer 20 and is capable of dissolving or dispersing, as a fine gel, the polymer electrolyte 22 in a highly fluid state. However, the dispersion medium desirably contains at least a volatile organic solvent. The dispersion medium of the ink may be water, alcohols, ketones, other polar solvents, ether-based solvents, or the like. Specific examples of the alcohols include methanol, ethanol, 1-propanol, 2-propanol, 1-butanol, 2-butanol, isobutyl alcohol, tert-butyl alcohol, and the like. Examples of the ketones include acetone, methyl ethyl ketone, methyl butyl ketone, methyl isobutyl ketone, methyl amyl ketone, pentanone, heptanone, cyclohexanone, methyl cyclohexanone, acetonyl acetone, diethyl ketone, dipropyl ketone, diisobutyl ketone, and the like. Examples of the polar solvents other than water, the alcohols, and the ketones include dimethylformamide, dimethylacetamide, N-methylpyrrolidone, ethylene glycol, diethylene glycol, diacetone alcohol, 1-methoxy-2-propanol, and the like. Examples of the ether-based solvents include tetrahydrofuran, dioxane, diethylene glycol dimethyl ether, anisole, methoxy toluene, dibutyl ether, and the like. In addition, the dispersion medium may be a solvent mixture obtained by mixing two or more of the above-described solvents.

In addition, in a case where a lower alcohol is used as the dispersion medium, it is preferable to use a solvent mixture of the lower alcohol and water from the viewpoint of further suppressing the ignition of the dispersion medium. Furthermore, from the viewpoint of the polymer electrolyte 22 being an ionomer, the dispersion medium preferably contains water that is compatible with ionomers, that is, water having a high affinity to ionomers. The content of water in the dispersion medium is not particularly limited as long as the ionomer does not separate and cause cloudiness or gelation. In a case where the catalyst 21 is supported on the carrier 21a, the ink may contain a dispersant to disperse the catalyst 21 and carrier 21a in the ink. Examples of the dispersant are anionic surfactants, cationic surfactants, amphoteric surfactants, and nonionic surfactants.

The content of the solid content in the ink is preferably 50 mass% or less. In this case, the generation of cracks in the surface of the electrode catalyst layer 20 is further suppressed. From the viewpoint of improving the film formation rate of the electrode catalyst layer 20, the content of the solid content in the ink is more preferably 1 mass% or more and 20% or less.

In the ink preparation step, the individual constituent components of the electrode catalyst layer 20 may be mixed together using the dispersion medium and then subjected to a dispersion treatment as necessary. The polymeric fibrous material may be dispersed in the dispersion medium in advance, then, mixed with other materials, and subjected to a dispersion treatment as necessary. The dispersion treatment is not particularly limited as long as the individual components in the electrode catalyst layer 20 can be dispersed. Examples of such a treatment include a treatment with a planetary ball mill and a roll mill, a treatment with a shear mill, a treatment by wet milling, an ultrasonic dispersion treatment, and a treatment with a homogenizer.

When the ink contains the polymeric fibrous material containing a functional group capable of forming a hydrogen bond, the polymeric fibrous material is capable of forming a stable three-dimensional network structure by the hydrogen bond in addition to the physical fiber intertwining. Therefore, cracking in the dried electrode catalyst layer can be suppressed, the dispersion stability of the catalyst in the ink is excellent, and the flow of the applied ink can also be suppressed, which provides excellent uniformity for the thicknesses of a coating film and the dried electrode catalyst layer and the amount of the catalyst supported.

In the case of being measured with a cone-plate viscometer (rheometer) at 23°C, the viscosity of the ink at a shear rate of 1 /s is preferably 500 to 5000 mPa·s. In this case, the dispersion of the catalyst in the ink is particularly stabilized, and it is possible to further suppress variation in thickness and the amount of the catalyst supported. In addition, the ink levels to an appropriate extent, which contributes to the flatness of the electrode catalyst layer. In the present specification, unless particularly otherwise described, the viscosity means a value measured with a cone-plate viscometer (rheometer) at 23°C.

In addition, for the ink, it is also suitable that the viscosity at a shear rate of 1/s is 30 to 12000 mPa·s and the thixotropic index value (hereinafter referred to as TI value in some cases) is 2.0 to 100 (-). The thixotropic index value is defined by (viscosity at shear rate of 1/s)/(viscosity at shear rate of 1000/s). The TI value may also be 3 or more, and even in this case, the viscosity at a shear rate of 1/s may be 100 to 8000 mPa·s or may be 500 to 5000 mPa·s. The thixotropic index value may be 3.0 or more, may be 4.0 or more, and may be 80 or less. When the ink contains the polymeric fibrous material having a functional group capable of forming a hydrogen bond, it is easy to provide such thixotropy.

### <Electrode catalyst layer formation step>

In the electrode catalyst layer formation step, the ink obtained in the ink preparation step is applied to one surface of the polymer electrolyte membrane 10, and a drying treatment for volatilizing the dispersion medium is then performed, thereby forming the electrode catalyst layer 20.

At this time, the electrode catalyst layer 20 is formed directly on the surface of the polymer electrolyte membrane 10.Therefore, the adhesion between the polymer electrolyte membrane 10 and the electrode catalyst layer 20 is enhanced. In addition, since no pressurization is required to join the electrode catalyst layer 20, collapsing of the electrode catalyst layer 20 is also suppressed.

Since the polymer electrolyte membrane 10 generally swells and shrinks to a large extent, when the ink is applied onto the polymer electrolyte membrane 10, the volume change of the polymer electrolyte membrane 10 is large compared with that in a case where the ink is applied onto a support substrate to form the electrode catalyst layer 20, and the electrode catalyst layer 20 is then transferred to the polymer electrolyte membrane 10.Therefore, in a case where the ink does not contain the fibrous material 23, cracks are likely to be generated in the electrode catalyst layer 20.In contrast, in a case when the ink contains the fibrous material 23, even in a case where the ink is directly applied onto the polymer electrolyte membrane 10, and the volume of the polymer electrolyte membrane 10 thereby changes significantly, the generation of cracks in the electrode catalyst layer 20 can be suppressed by the ink containing the fibrous material 23.

A method for applying the ink is not particularly limited, and various application methods can be used. As the application method, from the viewpoint of applying the ink onto the surface of the polymer electrolyte membrane 10 in a uniform film thickness, for example, a doctor blade method, a die coating method, a curtain coating method, a dipping method, a spray coating method, a screen printing method, a roll coating method, and the like can be preferably used.

A drying method used in the drying treatment is not particularly limited as long as the dispersion medium can be volatilized by the method, and it is possible to use methods in which an oven, a hot plate, warm air drying, or far-infrared radiation, and the like is used. In addition, the drying temperature and the drying time in the drying treatment can be selected as appropriate depending on the constituent materials of the ink. The drying temperature of the ink may be, for example, in a range of 40°C or higher and 200°C or lower and is preferably in a range of 40°C or higher and 120°C or lower. The drying time of the ink may be, for example, in a range of 0.5 minutes or longer and one hour or shorter and is preferably in a range of one minute or longer and 30 minutes or shorter.

Instead of forming the electrode catalyst layer 20 by applying the ink to the surface of the polymer electrolyte membrane 10 and then performing the drying treatment for volatilizing the dispersion medium, the electrode catalyst layer 20 may be formed by applying the ink to the surface of a support substrate different from the polymer electrolyte membrane 10, then, performing a drying treatment for volatilizing the dispersion medium, next, joining the electrode catalyst layer 20 to the polymer electrolyte membrane 10, and then performing a transfer treatment for peeling off the support substrate.

A material having favorable transferability may be used as the support substrate, and for example, a fluorine-based resin can be used. Examples of the fluorine-based resin include ethylene-tetrafluoroethylene copolymers (ETFE), tetrafluoroethylene-hexafluoropropylene copolymers (FEP), tetrafluoro perfluoroalkyl vinyl ether copolymers (PFA), polytetrafluoroethylene (PTFE), and the like. In addition, as the substrate, it is possible to use organic polymer compounds other than the fluorine-based resins such as polyimide, polyethylene terephthalate, polyamide (nylon (registered trademark)), polysulfone, polyethersulfone, polyphenylene sulfide, polyether/ether ketone, polyetherimide, polyarylate, and polyethylene naphthalate. The substrate may be in any form of a sheet or film.

As the above-described transfer treatment, for example, a transfer method by thermo-compression can be used.

After the formation of the electrode catalyst layer 20, the electrode catalyst layer 30 may be formed in the same manner.

### <Water electrolysis device and organic hydride electrolytic synthesis device>

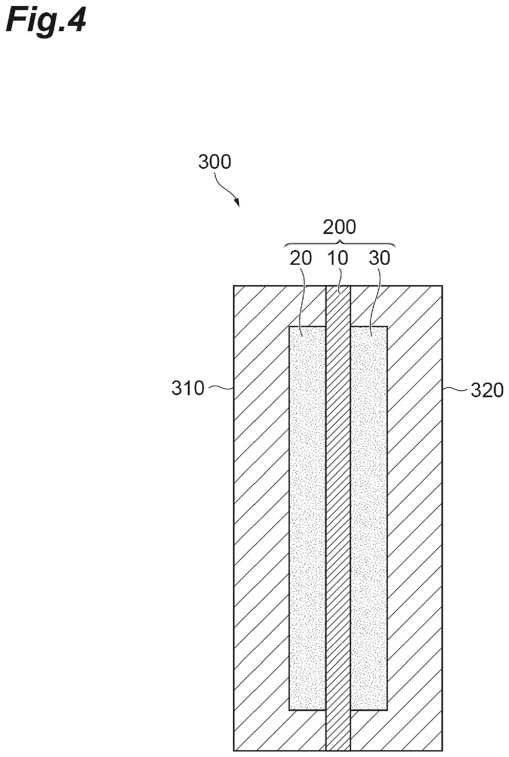

One embodiment of a water electrolysis device and organic hydride electrolytic synthesis device of the present disclosure will be described with reference to FIG. 4. FIG. 4 is a cross-sectional view showing one embodiment of a water electrolysis device or organic hydride electrolytic synthesis device 300 of the present disclosure.

As shown in FIG. 4, the water electrolysis device or organic hydride electrolytic synthesis device 300 of the present embodiment includes the membrane electrode assembly 200, an anode-side current collector 310 and a cathode-side current collector 320 provided to sandwich the membrane electrode assembly 200, and a DC power supply (not shown) electrically connected to the anode-side current collector 310 and the cathode-side current collector 320.

The anode-side current collector 310 is connected to the DC power supply to serve as an anode, and the anode-side current collector 310 is joined to the electrode catalyst layer 20 of the membrane electrode assembly 200.The cathode-side current collector 320 is connected to the DC power supply to serve as a cathode, and the cathode-side current collector 320 is joined to the electrode catalyst layer 30 of the membrane electrode assembly 200.

As the current collectors, any conductive materials can be used. Specific examples thereof include carbon paper, carbon non-woven fabrics, oxide or metal plates, and the like. Examples of the metal plates include titanium sintered bodies. As the carbon paper, water-repellent carbon paper may be used, and as the oxide or metal plates, precious metal-plated plates may be used. The current collectors may be porous bodies and may have a channel for supplying or discharging gas or liquid. The current collectors may function as a separator that holds liquid and gas that is supplied to or is generated and discharged from the cathode side and the anode side.

In the case of the water electrolysis device, when water and voltage are supplied, in the case of a proton exchange membrane type, oxygen and protons are generated from water in the electrode catalyst layer on the anode side and the generated protons are converted to hydrogen in the electrode catalyst layer on the cathode side, and in the case of an anion exchange membrane type, hydrogen and hydroxide ions are generated from water in the electrode catalyst layer on the cathode side, and the generated hydroxide ions are converted to oxygen and water in the electrode catalyst layer on the anode side. As the water, water such as ultrapure water can be used.

In addition, in the case of the organic hydride electrolytic synthesis device, when water, an organic substance such as toluene, and voltage are supplied, oxygen and protons are generated from water in the electrode catalyst layer on the anode side, and the generated protons are converted to an organic hydride such as methylcyclohexane by hydrogenating the organic substance in the electrode catalyst layer on the cathode side.

Since the water electrolysis device and organic hydride electrolytic synthesis device 300 include the above-described membrane electrode assembly 200, the generation of cracks in the electrode catalyst layer 20 is suppressed in the membrane electrode assembly 200. Therefore, when voltage is applied between the pair of cathode-side current collector 320 and anode-side current collector 310 from the power supply in a state where water has been supplied to the electrode catalyst layer 20 on the cathode side, disturbance of the potential distribution in the electrode catalyst layer 20 of the membrane electrode assembly 200 is suppressed, degradation of the water electrolysis performance can be suppressed, and the durability improves.

In the water electrolysis device and organic hydride electrolytic synthesis device 300 of the present disclosure, the electrode catalyst layer 20 is provided on the anode side, but may also be provided on the cathode side, and may be provided on both the anode side and the cathode side.

### (Action effect)

According to the above-described embodiment, the generation of cracks in the electrode catalyst layer is suppressed. In addition, variation in the amount of the catalyst supported among the electrode catalyst layers is suppressed.

The reason for the above-described action effect being exhibited is not clear, but can be considered as follows.

Since the electrode catalyst layer has the polymeric fibrous material having a functional group capable of forming a hydrogen bond, even when excessive stress is applied to the electrode catalyst layer due to the shrinkage of the electrode catalyst layer, which is caused by the swelling of the polymer electrolyte membrane due to moisture infiltration and the subsequent shrinkage of the electrolyte membrane due to moisture discharge during the drying of the electrolyte membrane at the time of forming the electrode catalyst layer by applying the ink onto one surface of the polymer electrolyte membrane, the stress is dispersed by the polymeric fibrous material having a three-dimensional network structure in the electrode catalyst layer. Therefore, it is considered that the generation of cracks in the electrode catalyst layer may be suppressed.

In addition, the fibers of the polymeric fibrous material may have a three-dimensional network structure in the ink and in the electrode catalyst layer due to the hydrogen bond and fiber intertwining. Additionally, when voltage is applied to the electrode catalyst layer for water electrolysis or organic hydride electrolytic synthesis, there is a case where a portion in which stress becomes locally excessive due to oxygen gas, hydrogen gas, or the like generated in the electrode catalyst layer is formed. Even in such a case, such excessive stress is dispersed by the polymeric fibrous material having a three-dimensional network structure included in the electrode catalyst layer. Therefore, it is considered that the generation of cracks in the electrode catalyst layer may be suppressed.

In addition, the addition of the polymeric fibrous material to the ink often increases the viscosity; however, when the TI (thixotropic index) value is high, actually, the apparent viscosity decreases due to a shear force during application with a die head or the like, the coated surface becomes favorable, and when the shear is no longer applied afterwards, the viscosity returns to be high, which significantly contributes to preventing the dripping of the coated surface and stabilizing the coated surface, and shrinkage stress applied during drying is uniformly dispersed, which makes it difficult for cracks to appear. In contrast, when the TI value exceeds 100, since a slight change in shear also causes a change in the viscosity, when the viscosity becomes high, the ink becomes difficult to handle, and the coating becomes difficult.

In addition, since the electrode catalyst layer contains the polymeric fibrous material having a functional group capable of forming a hydrogen bond, it is considered that the polymeric fibrous material may have a three-dimensional network structure due to the hydrogen bond and fiber intertwining even in the ink before the electrode catalyst layer is formed and the catalyst ink thickens. Therefore, the dispersion of catalyst particles in the ink is stabilized, and the sedimentation of the catalyst in the ink is suppressed for a long period of time. Therefore, it is considered that it is possible to suppress a change over time in the content of the catalyst in the ink to be applied, variation in the amount of the catalyst supported in the electrode catalyst layer is reduced, and cracks in the electrode catalyst layer accompanied by the variation in the amount of the catalyst supported are also suppressed.

The electrode catalyst layer of the present disclosure has few cracks and/or only small variation in the amount of the catalyst supported and thus provides uniform performance in water electrolysis devices or organic hydride electrolytic synthesis devices including a membrane electrode assembly having this electrode catalyst layer. Specifically, variation in performance can be suppressed in the water electrolysis device and the organic hydride electrolytic synthesis device including the membrane electrode assembly 200, and voltages applied to the individual membrane electrode assemblies become constant when the membrane electrode assemblies are used as a stack, whereby the durability of the water electrolysis device and the organic hydride electrolytic synthesis device can be improved. In addition, even in a single membrane electrode assembly, the disturbance of the potential distribution in the electrode catalyst layer 20 can be suppressed, degradation of the water electrolysis performance of the electrolysis device and the synthesis performance of the organic hydride electrolytic synthesis device can be suppressed, and the durability of the devices can be improved.

Furthermore, it is possible for the hydrogen-bonding functional group of the polymeric fibrous material 23 and the oxygen atom or the like in the proton-conductive functional group or the N atom, the H atom, or the like in the anion-conductive functional group of the polymer electrolyte 22 to bond to each other with a hydrogen bond, the polymer electrolyte 22 is likely to be present around the polymeric fibrous material 23, and it is possible to help the formation of a proton conduction path.

In addition, according to the electrode catalyst layer, it is also possible to improve the adhesion between the polymer electrolyte membrane and the electrode catalyst layer. Therefore, the generation of voids due to peeling between the polymer electrolyte membrane and the electrode catalyst layer can be suppressed, and an increase in resistance of the electrode catalyst layer arising from these voids can be further suppressed. According to what has been described above, the membrane electrode assembly including the electrode catalyst layer makes it possible to further suppress the degradation of electrolysis performance.

The reason for the electrode catalyst layer capable of improving the adhesion between the polymer electrolyte membrane and the electrode catalyst layer can be considered as follows. That is, it is considered that the adhesion between the polymer electrolyte membrane and the electrode catalyst layer can be improved by the electrode catalyst layer because the stress applied to the electrode catalyst layer is effectively dispersed by the fibrous material, and the shear force at the interface between the electrode catalyst layer and the polymer electrolyte membrane can be reduced.

### (Example of first embodiment)

Hereinafter, the contents of the first embodiment will be more specifically described using examples, but the present disclosure is not limited to the following examples.

### (Evaluation of amount of cracks)

In the following examples, as a method for determining the quantity of cracks, the contrast value by transmitted light was measured. When transmitted light is transmitted from the rear side of a laminate, since a larger amount of light penetrates defective portions such as cracks or pinholes, the contrast between black portions and portions that appear white due to the transmitted light can be used to determine the quantity of cracks. In the present examples, in a case where the contrast value (the number of black pixels/the number of white pixels) in an image of transmitted light exceeds 10³, the number of cracks was determined to be "large," and in a case where the contrast value is less than 10³, the number of cracks was determined to be "small."

### (Evaluation of viscosity of catalyst ink)

Viscosity was measured using a rheometer (manufactured by Thermo Fisher Scientific Inc., HAAKE VtiQ Air). The shear rate was changed under the following conditions.
Measuring temperature: 23°C
Measuring jig: Cone plate (diameter: 40 mm, angle: 2°)
Shear rate: 1000 to 1 sec⁻¹ (swept from high shear rate)
Number of data points: 10

### (Measurement of shear strength of electrode catalyst layer)

In the following examples, as a method for measuring the strength of the catalyst layer, the shear strength was measured using a surface/interface property analyzer. For the measurement, SAICAS DN type (manufactured by Daipla Wintes Co., Ltd.) was used, and a diamond blade (width: 1 mm, rake angle: 20°, clearance angle: 10°) was used.
Horizontal rate: 10 µm/sec
Cutting depth: 1 µm

### (Water electrolysis performance evaluation)

In the following examples, as a method for evaluating the water electrolysis performance of the membrane electrode assembly, I-V measurement was performed by the following procedure. Pt-plated Ti meshes were incorporated as power feeders into both surfaces of the membrane electrode assembly and used as an electrolytic cell for evaluation. Voltages applied stepwise at current densities of 0 to 3 A/cm² at 50°C were measured, and the voltage at 2.0 A/cm² was examined.

### (Example 1)

First, a catalyst powder composed of iridium oxide (product number "TEC77100," manufactured by Tanaka Kikinzoku Kogyo K.K.) as a catalyst, a dispersion liquid containing NAFION (registered trademark) as a polymer electrolyte (trade name "NAFION (registered trademark) DE2020," manufactured by FUJIFILM Wako Pure Chemical Corporation), and cellulose nanofibers (trade name "BiNFi-s IMa 10002 Extreme Length," manufactured by Sugino Machine Limited Co., Ltd.) as a polymeric fibrous material were mixed together in a solvent and dispersed with a planetary ball mill for 60 minutes to prepare a catalyst ink. As a solvent of the catalyst ink, a solvent mixture of ultrapure water and 1-propanol was used. The volume ratio between ultrapure water and 1-propanol was set to 30:70.At this time, the catalyst ink was adjusted so that the content of the solid content in the catalyst ink reached 10 mass%. In addition, the amount of the fibrous material blended was set to 5 parts by mass relative to 100 parts by mass of the catalyst. The fibrous material was confirmed to have an average fiber diameter of 10 nm and an average fiber length of 6 µm. The amount of the polymer electrolyte blended was set to 30 parts by mass relative to 100 parts by mass of the catalyst.

The viscosity of the catalyst ink thus obtained was measured using a rheometer (manufactured by Thermo Fisher Scientific Inc., HAAKE VtiQ Air) as described above. The shear rate was varied under the following conditions.
Measuring temperature: 23°C
Measuring jig: Cone plate (diameter: 40 mm, angle: 2°)
Shear rate: 1000 to 1 sec⁻¹ (swept from high shear rate)
Number of data points: 10

As a result of measuring the viscosity as described above, the viscosity at a shear rate of 1 /s was 1000 mPa·s. In addition, the viscosity at a shear rate of 1000 /s was 17.9 Pa·s, and TI reached 56.

In addition, the prepared catalyst ink was loaded into a container and the solid content ratios at a portion at 1/5 of the liquid height from the liquid surface immediately after the loading and after 24 hours were measured. As a result, the solid content ratio retention rate was as shown in the table.

As a polymer electrolyte membrane, a NAFION (registered trademark) membrane (trade name "N117," DuPont de Nemours, Inc.) was prepared.

Next, the catalyst ink was applied to one main surface of the polymer electrolyte membrane using a slit die coater by a die coating method so that the amount of iridium oxide supported reached 0.5 mg/cm² per area of the main surface. In addition, a drying treatment was performed in an oven at 80°C to remove the solvent component in the catalyst ink, and a laminate of an electrode catalyst layer and the polymer electrolyte membrane was obtained. The thickness of the electrode catalyst layer was 8.2 µm.

As a result of observing the obtained laminate, the quantity of cracks in the electrode catalyst layer of Example 1 was "small." In addition, in the laminate, peeling of the electrode catalyst layer from the polymer electrolyte membrane was not observed. The shear strength of the electrode catalyst layer of the obtained laminate was measured in the same manner as described above and found out to be 0.10 N/mm.

Coating of the polymer electrolyte membrane with the slit die coater was repeated over six hours. The amount of the catalyst supported in the laminate obtained by coating after six hours from the start of the coating was measured using an X-ray fluorescence spectrometer, and the ratio to the amount of the catalyst supported in the laminate obtained by coating at the start of the coating (retention of the amount supported) was confirmed, which was as shown in the table.

The electrode catalyst layer was laminated on the rear surface of the obtained laminate as a cathode by the following procedure. Pt-supported carbon particles (product number "TEC10E50E," Tanaka Kikinzoku Kogyo K.K.) as a catalyst and a dispersion liquid containing NAFION (registered trademark) as a polymer electrolyte (trade name "NAFION (registered trademark) DE2020," manufactured by FUJIFILM Wako Pure Chemical Corporation) were mixed together in a solvent and dispersed with a planetary ball mill for 60 minutes to prepare a cathode catalyst ink. As a solvent of the catalyst ink, a solvent mixture of ultrapure water and 1-propanol was used. The volume ratio between ultrapure water and 1-propanol was set to 30:70.The cathode catalyst ink was applied to a surface of the laminate on which the electrode catalyst layer was not provided using the slit die coater by the die coating method so that the amount of Pt supported reached 0.5 mg/cm² per area of the main surface. In addition, a drying treatment was performed in the oven at 80°C to remove the solvent component in the catalyst ink, and a laminate of an electrode catalyst layer and the polymer electrolyte membrane was obtained. The electrolysis performance of the membrane electrode assembly thus obtained was evaluated by the method described above. The electrolysis voltage at 2.0 A/cm² was 1.86 V.

### (Example 2)

First, a catalyst powder composed of iridium oxide (product number "TEC77100," manufactured by Tanaka Kikinzoku Kogyo K.K.) as a catalyst, a dispersion liquid containing NAFION (registered trademark) as a polymer electrolyte (trade name "NAFION (registered trademark) DE2020," manufactured by FUJIFILM Wako Pure Chemical Corporation), and cellulose nanofibers (trade name "BiNFi-s IMa 10002 Extreme Length," manufactured by Sugino Machine Limited Co., Ltd.) as a polymeric fibrous material were mixed together in a solvent and dispersed with a planetary ball mill for 60 minutes to prepare a catalyst ink. As a solvent of the catalyst ink, a solvent mixture of ultrapure water and 1-propanol was used. The volume ratio between ultrapure water and 1-propanol was set to 30:70.At this time, the catalyst ink was adjusted so that the content of the solid content in the catalyst ink reached 10 mass%. In addition, the amount of the fibrous material blended was set to 5 parts by mass relative to 100 parts by mass of the catalyst. The fibrous material was confirmed to have an average fiber diameter of 10 nm and an average fiber length of 3 µm. The amount of the polymer electrolyte blended was set to 30 parts by mass relative to 100 parts by mass of the catalyst.

As a result of measuring the viscosity of the catalyst ink thus obtained in the same manner as described above, the viscosity at a shear rate of 1 /s was 800 mPa·s. In addition, the viscosity at a shear rate of 1000 /s was 200 Pa·s, and TI reached 4.0.

In addition, the prepared catalyst ink was loaded into a container and the solid content ratios from the liquid surface to a portion at a liquid height of 1/5 immediately after the loading and after 24 hours were measured. As a result, the solid content ratio retention was as shown in the table.

As a polymer electrolyte membrane, a NAFION (registered trademark) membrane (trade name "N117," DuPont de Nemours, Inc.) were prepared.

Next, the catalyst ink was applied to one main surface of the polymer electrolyte membrane using a slit die coater by a die coating method so that the total amount of iridium oxide supported reached 0.5 mg/cm² per area of the main surface. In addition, a drying treatment was performed in an oven at 80°C to remove the solvent component in the catalyst ink, and a laminate of an electrode catalyst layer and the polymer electrolyte membrane was obtained. The thickness of the electrode catalyst layer was 8.3 µm.

As a result of observing the obtained laminate, the number of cracks in the electrode catalyst layer of Example 2 was "small." In addition, in the laminate, peeling of the electrode catalyst layer from the polymer electrolyte membrane was not observed. The shear strength of the electrode catalyst layer of the obtained laminate was measured in the same manner as described above and found out to be 0.08 N/mm.

Coating of the polymer electrolyte membrane with the slit die coater was repeated over six hours. The amount of the catalyst supported in the laminate obtained by coating after six hours from the start of the coating was measured using an X-ray fluorescence spectrometer, and the ratio to the amount of the catalyst supported in the laminate obtained by coating at the start of the coating (retention of the amount supported) was confirmed, which was as shown in the table.

### (Example 3)

First, a catalyst powder composed of iridium oxide (product number "TEC77100," manufactured by Tanaka Kikinzoku Kogyo K.K.) as a catalyst, a dispersion liquid containing NAFION (registered trademark) as a polymer electrolyte (trade name "NAFION (registered trademark) DE2020," manufactured by FUJIFILM Wako Pure Chemical Corporation), and chitin nanofibers (trade name "BiNFi-s SFo 2002 Chitin," manufactured by Sugino Machine Limited Co., Ltd.) as a polymeric fibrous material were mixed together in a solvent and dispersed with a planetary ball mill for 60 minutes to prepare a catalyst ink. As a solvent of the catalyst ink, a solvent mixture of ultrapure water and 1-propanol was used. The volume ratio between ultrapure water and 1-propanol was set to 30:70.At this time, the catalyst ink was adjusted so that the content of the solid content in the catalyst ink reached 10 mass%. In addition, the amount of the fibrous material blended was set to 5.0 mass% relative to 100 mass% of the catalyst. The fibrous material was confirmed to have an average fiber diameter of 10 nm.

In addition, as a result of evaluating the ink in the same manner as in Example 1, the viscosity at a shear rate of 1 /s was 165 mPa·s. In addition, the viscosity at a shear rate of 1000 /s was 16.5 Pa·s, and TI reached 10.In addition, the prepared catalyst ink was loaded into a container and the solid content ratios from the liquid surface to a portion at a liquid height of 1/5 immediately after the loading and after 24 hours were measured. As a result, the solid content ratio retention was as shown in the table.

Incidentally, as a polymer electrolyte membrane, a NAFION (registered trademark) membrane (trade name "N117", DuPont de Nemours, Inc.) was prepared.

Next, the catalyst ink was applied to one main surface of the polymer electrolyte membrane using a slit die coater by a die coating method so that the amount of iridium oxide supported reached 0.5 mg/cm² per area of the main surface. In addition, a drying treatment was performed in an oven at 80°C to remove the solvent component in the catalyst ink, and a laminate of an electrode catalyst layer and the polymer electrolyte membrane was obtained. The thickness of the electrode catalyst layer was 8.1 µm.

As a result of observing the obtained laminate, the quantity of cracks in the electrode catalyst layer of Example 1 was "small." In addition, in the laminate, peeling of the electrode catalyst layer from the polymer electrolyte membrane was not observed. The shear strength of the electrode catalyst layer of the obtained laminate was measured in the same manner as described above and found out to be 0.08 N/mm.

Coating of the polymer electrolyte membrane with the slit die coater was repeated over six hours. The amount of the catalyst supported in the laminate obtained by coating after six hours from the start of the coating was measured using an X-ray fluorescence spectrometer, and the ratio to the amount of the catalyst supported in the laminate obtained by coating at the start of the coating (retention of the amount supported) was confirmed, which was as shown in the table.

The electrode catalyst layer was laminated on the rear surface of the obtained laminate as a cathode by the following procedure. Pt-supported carbon particles (product number "TEC10E 50E", Tanaka Kikinzoku Kogyo K.K.) as a catalyst and a dispersion liquid containing NAFION (registered trademark) as a polymer electrolyte (trade name "NAFION (registered trademark) DE2020," manufactured by FUJIFILM Wako Pure Chemical Corporation) were mixed together in a solvent and dispersed with a planetary ball mill for 60 minutes to prepare a cathode catalyst ink. As a solvent of the catalyst ink, a solvent mixture of ultrapure water and 1-propanol was used. The volume ratio between ultrapure water and 1-propanol was set to 30:70.The cathode catalyst ink was applied to a surface of the laminate on which the electrode catalyst layer was not provided using the slit die coater by the die coating method so that the amount of Pt supported reached 0.5 mg/cm² per area of the main surface. In addition, a drying treatment was performed in a oven at 80°C to remove the solvent component in the catalyst ink, and a laminate of an electrode catalyst layer and the polymer electrolyte membrane was obtained. The electrolysis performance of the membrane electrode assembly thus obtained was evaluated by the method described above. The electrolysis voltage at 2.0 A/cm² was 1.87 V.

### (Comparative Example 1)

A catalyst ink and a laminate of an electrode catalyst layer and an electrolyte membrane were obtained by the same procedure as in Example 1 except that the fibrous material was not contained. The thickness of the electrode catalyst layer was 7.4 µm.

As a result of measuring the viscosity of the obtained catalyst ink in the same manner, the viscosity at a shear rate of 1 /s was 8 mPa·s. In addition, the viscosity at a shear rate of 1000 /s was 20.0 Pa·s, and TI reached 0.4. In addition, the prepared catalyst ink was loaded into a container and the solid content ratios at a portion at 1/5 of the liquid height from the liquid surface immediately after the loading and after 24 hours were measured. As a result, the solid content ratio retention was as shown in the table. As a result of observing the obtained laminate, the quantity of cracks in the electrode catalyst layer of Comparative Example 1 was "large." In addition, in the laminate, partial peeling of the electrode catalyst layer from the polymer electrolyte membrane was observed. Coating of the polymer electrolyte membrane with the ink with the slit die coater was repeated over six hours. The amount of the catalyst supported in the laminate obtained by coating after six hours from the start of the coating was measured using an X-ray fluorescence spectrometer, and the ratio to the amount of the catalyst supported in the laminate obtained by coating at the start of the coating (retention of the amount supported) was confirmed, which was as shown in the table. The shear strength of the electrode catalyst layer of the obtained laminate was measured and found out to be 0.04 N/mm.

The electrode catalyst layer was laminated on the rear surface of the obtained laminate as a cathode by the following procedure. Pt-supported carbon particles (product number "TEC10E50E", Tanaka Kikinzoku Kogyo K.K.) as a catalyst and a dispersion liquid containing NAFION (registered trademark) as a polymer electrolyte (trade name "NAFION (registered trademark) DE2020," manufactured by FUJIFILM Wako Pure Chemical Corporation) were mixed together in a solvent and dispersed with a planetary ball mill for 60 minutes to prepare a cathode catalyst ink. As a solvent of the catalyst ink, a solvent mixture of ultrapure water and 1-propanol was used. The volume ratio between ultrapure water and 1-propanol was set to 30:70.The cathode catalyst ink was applied to a surface of the laminate on which the electrode catalyst layer was not provided using the slit die coater by the die coating method so that the amount of Pt supported reached 0.5 mg/cm² per area of the main surface. In addition, a drying treatment was performed in an oven at 80°C to remove the solvent component in the catalyst ink, and a laminate of an electrode catalyst layer and the polymer electrolyte membrane was obtained. The electrolysis performance of the membrane electrode assembly thus obtained was evaluated by the method described above. The electrolysis voltage at 2.0 A/cm² was 1.91 V.

### (Comparative Example 2)

A catalyst ink was obtained by the same procedure as in Example 1 except that the amount of the fibrous material blended was set to 15 parts by mass relative to 100 parts by mass of the catalyst.

As a result of measuring the viscosity of the catalyst ink in the same manner, the viscosity at a shear rate of 1 /s was 9000 mPa·s. In addition, the viscosity at a shear rate of 1000 /s was 11250 Pa·s, and TI reached 0.8. The viscosity was high, coating of the electrolyte membrane with the ink as a film having a uniform thickness was difficult, and it was not possible to obtain an electrode catalyst layer.

### (Comparative Example 3)

A catalyst ink and a laminate of an electrode catalyst layer and an electrolyte membrane were obtained by the same procedure as in Example 1 except that carbon fibers having no functional groups capable of forming a hydrogen bond, such as a hydroxy group, and having a fiber diameter of 200 nm (fiber diameter: 150 nm, fiber length: 6 µm, VGCF-H manufactured by Resonac Corporation) were used as the fibrous material. The thickness of the electrode catalyst layer was 8.2 µm.

As a result of measuring the viscosity of the obtained catalyst ink in the same manner, the viscosity at a shear rate of 1 /s was 200 mPa·s. In addition, the viscosity at a shear rate of 1000 /s was 133 Pa·s, and TI reached 1.5. In addition, the prepared catalyst ink was loaded into a container and the solid content ratios from the liquid surface to a portion at a liquid height of 1/5 immediately after the loading and after 24 hours were measured. As a result, the solid content ratio retention was as shown in the table.

As a result of observing the obtained laminate, the number of cracks in the electrode catalyst layer of Comparative Example 3 was "large." In addition, in the laminate, partial peeling of the electrode catalyst layer from the polymer electrolyte membrane was observed. The shear rate of the electrode catalyst layer of the obtained laminate was measured and found out to be 0.05 N/mm.

**[Table 1]**

| Table 1 | Polymeric fiber | Fiber diameter | Fiber length | Viscosity at shear rate of 1/s [mPa·s] | Viscosity at shear rate of 1000/s [mPa·s] | Solid content ratio retention rate of ink in upper portion of container after 24 h [%] | Quantity of cracks in electrode catalyst layer | Retention rate of amount of catalyst supported in laminate coated 6h after the start of coating (%) | Shear strength at depth of 1 µm of electrode catalyst layer [N/mm] | TI value, that is, ratio of (1/s viscosity)/(1000/s viscosity) (-) |
|---|---|---|---|---|---|---|---|---|---|---|
| | | [nm] | [µm] | | | | | | | |
| Example 1 | Cellulose nanofiber | 10 | 6 | 1000 | 17.9 | 85 | Small | 98 | 0.10 | 56 |
| Example 2 | | 10 | 3 | 800 | 200 | 70 | Small | 95 | 0.08 | 4.0 |
| Example 3 | Chitin nanofiber | 10 | - | 165 | 16.5 | 68 | Small | 94 | 0.08 | 10 |
| Comparative Example 1 | None | - | - | 8 | 20.0 | 30 | Large | 60 | 0.04 | 0.4 |
| Comparative Example 2 | Cellulose nanofiber | 10 | 6 | 9000 | 11250 | - | - | - | - | 0.8 |
| Comparative Example 3 | Carbon fiber | 150 | 6 | 200 | 133 | 35 | Large | - | 0.05 | 1.5 |

### (Second embodiment)

### <Membrane electrode assembly for water electrolysis or organic hydride electrolytic synthesis 200>.

An embodiment of a membrane electrode assembly for water electrolysis or organic hydride electrolytic synthesis 200 of the present disclosure will be described with reference to FIGS. 1 to 3. FIG. 1 is a cross-sectional view showing an embodiment of the membrane electrode assembly for water electrolysis or organic hydride electrolytic synthesis 200 of the present disclosure, and FIG. 2 is a view showing a view schematically and partially showing an example of an electrode catalyst layer 20 in FIG. 1.

As shown in FIG. 1, the membrane electrode assembly for water electrolysis or organic hydride electrolytic synthesis 200 has a polymer electrolyte membrane 10, an electrode catalyst layer 20 provided on one surface of the polymer electrolyte membrane 10, and an electrode catalyst layer 30 provided on the other surface of the polymer electrolyte membrane 10.The electrode catalyst layer 20 includes a catalyst 21, a polymer electrolyte 22, and a polymeric fibrous material 23 (see FIG. 2).

Hereinafter, the polymer electrolyte membrane 10 and the electrode catalyst layer 20 will be described in more detail.

### (Polymer electrolyte membrane 10)

The polymer electrolyte membrane 10 is a proton-conductive polymer electrolyte membrane in PEM (proton exchange membrane) type water electrolysis device and organic hydride electrolytic synthesis device. The proton-conductive polymer electrolyte has a proton-conductive functional group. Examples of the proton-conductive functional group are a sulfo group (-SO₃H), a phosphonic acid group (-PO₃H₂), and a carboxyl group (-COOH), and the proton-conductive functional group may be in a form of a salt of a metal or the like.

As specific examples of the proton-conductive polymer electrolyte membrane, a fluorine-based polymer electrolyte membrane or a hydrocarbon-based polymer electrolyte membrane can be used. As the fluorine-based polymer electrolyte membrane, it is possible to use, for example, Nafion (registered trademark) manufactured by DuPont de Nemours, Inc., Flemion (registered trademark) manufactured by AGC Inc., Aciplex (registered trademark) manufactured by Asahi Kasei Corporation, Gore Select (registered trademark) manufactured by W. L. Gore & Associates, and the like. As the hydrocarbon-based polymer electrolyte membrane, it is possible to use, for example, polymer electrolyte membranes such as sulfonated polyetherketone, sulfonated polyethersulfone, sulfonated polyether ether sulfone, sulfonated polysulfide, and sulfonated polyphenylene.

The polymer electrolyte membrane 10 is an anion-conductive polymer electrolyte membrane in an AEM (anion exchange membrane type) type water electrolysis device. The anion-conductive polymer electrolyte has an anion-conductive functional group. A typical specific example of the anion conductivity is hydroxide ion (OH⁻) conductivity.

Examples of the anion-conductive functional group are ammonium groups such as quaternary ammonium groups (NR₄⁺); primary to tertiary amino groups; phosphonium groups such as quaternary phosphonium groups (PR₄⁺); and sulfonium groups such as tertiary sulfonium groups (SR₃⁺); and the anion-conductive functional group may be in a form of a salt of a metal or the like. R is an organic group such as an alkyl group or an aryl group.

Examples of the quaternary ammonium groups are a trimethylammonium group, an imidazolium group, a pyridinium group, and the like. An example of the amino groups is a dimethylamino group.

Examples of commercially available anion exchange membranes include A201, A901 (both manufactured by Tokuyama Corporation); fumasep (trademark) FAA (for example, FAB-3, FAA-3-50, FAA-3-PK-130, and FAA-3-PP-75), FAB (all manufactured by FUMATECH BWT GmbH); Sustainion (trademark) 37-50 (manufactured by Dioxide Materials); NEOSEPTA (registered trademark) ACM, AM-1, ACS, ACLE-5P, AHA, AMH, (all manufactured by ASTOM Corporation); SELEMION (registered trademark) AMT, DSV, AAV, ASV, AHT, APS (all manufactured by AGC Inc.); Aciplex (registered trademark) A-501, A-231, A-101 (all manufactured by Asahi Kasei Corporation), PiperION (trademark) A20-HCO₃, A40-HCO₃, A80-HCO₃ (all manufactured by Versogen), and the like.

The thickness of the polymer electrolyte membrane 10 is not particularly limited, but is usually 20 to 250 µm and preferably 20 to 80 µm. When the thickness of the polymer electrolyte membrane 10 is within the above-described range, it is possible to maintain the mechanical durability of the polymer electrolyte membrane 10 and to reduce proton resistance (anion resistance) to enhance electrolysis performance.

### (Electrode catalyst layer 20)

The electrode catalyst layer 20 includes a catalyst 21, a polymer electrolyte 22, and a polymeric fibrous material 23.

### (1) Catalyst

The catalyst 21 includes catalysts that cause a reaction that generates oxygen from water at the anode (anode) of a water electrolysis device or organic hydride electrolytic synthesis device (also described as anode catalysts), catalysts responsible for a reaction that generates hydrogen from water at the cathode (cathode) of a water electrolysis device (also described as cathode catalysts), or catalysts that cause the hydrogenation of an organic compound at the cathode of an organic hydride electrolytic synthesis device (also described as cathode catalysts).

As the anode catalysts, metals included in the platinum group, metals not included in the platinum group, or alloys, oxides, mixed oxides, or carbides of these metals can be used. Each of these can be used singly or two or more thereof can be used in combination.

Among the anode catalysts, ruthenium, rhodium, palladium, iridium, platinum, alloys containing at least one thereof, and oxides thereof are suitable due to high catalytic activities.

For example, iridium (Ir), platinum (Pt), rhodium (Rh), palladium (Pd), nickel (Ni), oxides thereof (IrOₓ, RuOₓ, PdOₓ, and NiOₓ), alloys of iridium (Ir) and ruthenium (Ru), alloys of iridium (Ir) and titanium dioxide (TiO₂) are suitably used.

Particularly, IrOₓ is in wide use due to its outstanding catalytic activity.

Other preferable examples of the anode catalysts include composite oxides of cobalt and copper (for example, CuCoO₃, CuCoOₓ (x is a real number depending on the average oxidation number of a metal element), CuxCo₃₋ₓO₄ (x is a real number of 0 < x < 3), Cu_{0.7}Co_{2.3}O₄ and the like); composite oxides of nickel and cobalt (for example, NiCo₂O₄ and the like); catalysts obtained by doping iron into a composite oxide of nickel and cobalt (NiCoOₓ:Fe (x is a real number depending on the average oxidation number of a metal element)); composite oxides of nickel and iron (for example, NiFe₂O₄ and the like); composite oxides of ruthenium and lead (for example, Pb₂Ru₂O_{6.5} and the like); composite oxides of manganese, iron, and cerium (for example, Ce_{0.2}MnFe_{1.8}O₄ and the like); Ni-Fe alloys; Ni-Al alloys, and the like.

In addition, as the cathode catalysts, it is possible to preferably employ, for example, precious metals such as platinum, palladium, ruthenium, iridium, rhodium, and osmium, base metals such as nickel, cobalt, molybdenum, or manganese, or oxides of these precious metals or base metals. Other preferable examples of the cathode catalysts include platinum (for example, platinum supported on carbon (Pt/C), Pt black, and the like), nickel supported on cerium dioxide and lanthanum (III) oxide supported on activated carbon (Ni/CeO₂-La₂O₃/C), Ni-Mo alloy, Ni-Fe-Co alloys, Ni-Al-Mo alloys, and the like.

The catalyst is usually particulate. The average particle diameter of the primary particles of the particulate catalyst is preferably 100 nm or less and more preferably 50 nm or less. In this case, the activity of the catalyst further improves. The average particle diameter is the arithmetic average of the equivalent area diameters of 20 particles in an SEM image. In a case where the catalyst is supported on a conductive carrier as described below, the average particle diameter of the carrier is preferably 100 nm or less and more preferably 50 nm or less.

The catalyst 21 may be supported on a conductive carrier 21a as shown in FIG. 3. The carrier 21a needs to be a conductive material capable of supporting the catalyst 21 without being eroded by the catalyst 21. As such a carrier 21a, carbon, TiO₂, Ti, SnO₂, and Sn are often used. The average particle diameter of the carrier is preferably 10 nm or more. In this case, an electron conduction path is likely to be formed. Here, from the viewpoint of decreasing the resistance value of the electrode catalyst layer 30 and increasing the amount of the catalyst supported, the average particle diameter of the carrier is preferably 1000 nm or less and more preferably 100 nm or less. Here, the average particle diameter is the arithmetic average of the equivalent area diameters of 20 particles in an SEM image.

In the present embodiment, the catalyst 21 may or may not be supported on the carrier 21a.

### (2) Polymer electrolyte (ionomer)

The polymer electrolyte 22 is a proton-conductive or anion-conductive polymer electrolyte. These have been described in the section of the polymer electrolyte membrane and will be thus not described again.

The polymer electrolyte 22 is capable of functioning as a binder that bonds between the catalysts 21, between the fibers of the polymeric fibrous materials 23, and between the catalyst 21 and the polymeric fibrous material 23. In addition, the polymer electrolyte 22 is capable of functioning as a binder that bonds at least one of the catalyst 21 and the polymeric fibrous material 23 to the polymer electrolyte membrane 10.

The polymer electrolyte 22 may be the same polymer electrolyte as the polymer electrolyte membrane 10 or may be a polymer electrolyte different from the polymer electrolyte membrane 10. However, considering the interfacial resistance at the interface between the polymer electrolyte membrane 10 and the electrode catalyst layer 20 and the dimensional change rate in the polymer electrolyte membrane 10 and the electrode catalyst layer 20 in a case where the humidity changes, the polymer electrolyte in the polymer electrolyte membrane 10 and the polymer electrolyte 22 in the electrode catalyst layer 20 are preferably the same electrolyte as each other or polymer electrolytes having thermal expansion coefficients close to each other.

For example, in the case of enhancing the adhesion between the electrode catalyst layer 20 and the polymer electrolyte membrane 10, when the constituent material of the polymer electrolyte 22 is a fluorine-based polymer electrolyte, the constituent material of the polymer electrolyte membrane 10 is also preferably a fluorine-based polymer electrolyte. In addition, when the constituent material of the polymer electrolyte 22 is a hydrocarbon-based polymer electrolyte, the constituent material of the polymer electrolyte membrane 10 is also preferably a hydrocarbon-based polymer electrolyte, and when the constituent material of the polymer electrolyte 22 is a hydroxide ion-conductive polymer electrolyte, the constituent material of the polymer electrolyte membrane 10 is also preferably a hydroxide ion-conductive polymer electrolyte.

The amount of the polymer electrolyte 22 blended is preferably 10 to 100 parts by mass and more preferably 20 to 70 parts by mass relative to 100 parts by mass of the catalyst. In this case, since a structure in which the polymeric fibers intertwine together is suitably formed, the strength of the electrode catalyst layer 20 is further increased, and the generation of cracks can be further suppressed.

In a case where the catalyst 21 contains the carrier 21b, the polymeric fiber may be within a range of 1 part by mass or more and 20 parts by mass or less based on the carrier 21b in the catalyst 21 (100 parts by mass).

### (3) Polymeric fibrous material

The average fiber diameter of the polymeric fibrous material 23 is not particularly limited, but is preferably 3 nm or more, more preferably 5 nm or more and is preferably 100 nm or less, more preferably 50 nm or less, and even more preferably 20 nm or less. In this case, an effect of further suppressing the generation of cracks in the electrode catalyst layer 20 can be obtained with a smaller amount of the fibrous material added. In addition, it is also possible to improve the adhesion between the polymer electrolyte membrane 10 and the electrode catalyst layer 20.Therefore, the generation of voids due to peeling of the polymer electrolyte membrane 10 and the electrode catalyst layer 20 can be suppressed, and an increase in resistance of the membrane electrode assembly arising from these voids can be further suppressed. According to what has been described above, the membrane electrode assembly makes it possible to further suppress the degradation of the electrolysis performance of water or an organic hydride.

The average fiber diameter of the polymeric fibrous material 23 refers to the average value of diameters measured from a cross section of an exposed polymeric fibrous material 23 when a cross section of the electrode catalyst layer 20 is observed using a scanning electron microscope (SEM). In a case where the polymeric fibrous material 23 is cut at an angle with respect to the major axis, an elliptical cross section is obtained, and in such a case, the diameter refers to the diameter of a true circle fitted along the minor axis of the ellipse. In addition, in a case where the cross section of the electrode catalyst layer 20 is observed using SEM, the surface of the polymeric fibrous material 23 may be exposed instead of the cross section of the polymeric fibrous material 23. In that case, the diameter refers to the width of the fiber perpendicular to the major axis of the exposed polymeric fibrous material 23. The average fiber diameter of the polymeric fibrous material 23 refers to the arithmetic average value of the fiber diameters measured in the same manner in at least 20 observation points.

As a method for exposing the cross section of the electrode catalyst layer 20, it is possible to use a known method, for example, ion milling, ultramicrotome, or the like.

The average fiber length of the polymeric fibrous material 23 is not particularly limited, but is preferably 1 µm or longer, more preferably 2 µm or longer, even more preferably 3 µm or longer, and far even more preferably 4 µm or longer. In this case, the polymeric fibrous material 23 intertwines together, voids having an appropriate size are formed in the electrode catalyst layer 20, and the mechanical characteristics of the electrode catalyst layer 20 can be improved. However, the average fiber length of the polymeric fibrous material 23 is preferably 100 µm or shorter and more preferably 40 µm or shorter.

The average fiber length of the polymeric fibrous material 23 is defined as the arithmetic average value of the fiber lengths obtained by measuring at least 10 fibers of the polymeric fibrous material 23. The average fiber length of the polymeric fibrous material 23 in the electrode catalyst layer 20 can be obtained by measuring the particle size distribution using a solution obtained by dissolving the electrode catalyst layer 20 in a solvent.

The material of the polymeric fibrous material is not particularly limited. For example, the polymeric fibrous material may be polyacrylonitrile nanofibers, polylactic acid nanofibers, or polycaprolactone nanofibers. The polymeric fibrous material may have a functional group capable of forming a hydrogen bond. "Being capable of forming a hydrogen bond" means being capable of forming hydrogen bonds with other functional groups.

The polymeric fibrous material suitably has a functional group capable of forming a hydrogen bond in the repeating unit.

The functional group capable of forming a hydrogen bond may function as a hydrogen bond donor or may function as a hydrogen bond acceptor.

Examples of the functional group that functions as a hydrogen bond donor are a hydroxyl group (-OH) and a N-H bond. In these functional groups, because electrons-rich oxygen and nitrogen are directly bonds to hydrogen, the hydrogen atom functions as a hydrogen bond donor.

Examples of the functional group that functions as a hydrogen bond acceptor are functional groups having an oxygen atom such as a carbonyl group (>C=O), a group having an ether bond (-O-), a group having an ester bond (-COO-), a hydroxyl group (-OH); functional groups having a nitrogen atom such as an amino group (-NH₂), and an amide group (-CO-NH₂); and functional groups having a fluorine atom such as -CF₃. In these functional groups, because electron-rich oxygen, nitrogen, and fluorine atom are bonded to hydrogen, the oxygen, nitrogen, and fluorine atoms function as hydrogen bond acceptors.

The hydroxyl group and the N-H bond are capable of playing a role of both a hydrogen bond donor and a hydrogen bond acceptor.

From the viewpoint of promoting the formation of a hydrogen bond between the fibers of the polymeric fibrous material, the functional group capable of forming a hydrogen bond is preferably a hydroxyl group and/or a N-H bond, or a combination of the functional group that functions as a donor and the functional group that functions as an acceptor.

When the polymeric fibrous material 23 contains the functional group capable of forming a hydrogen bond in the molecular structure of the material, the polymeric fibrous material is capable of forming a three-dimensional network structure in the electrode catalyst layer by the hydrogen bond and the physical fiber intertwining, cracks are less likely to be generated, and the durability of the electrode catalyst layer 20 becomes high.

In order to efficiently form a three-dimensional network structure with a small amount of the polymeric fibrous material added, the number of the functional groups capable of forming a hydrogen bond in the repeating unit of the polymeric fibrous material is preferably two or more.

Furthermore, it is possible for the hydrogen-bonding functional group of the polymeric fibrous material and the oxygen atom or the like in the proton-conductive functional group or the N atom, the H atom, or the like in the anion-conductive functional group of the polymer electrolyte 22 to bond to each other with a hydrogen bond, the polymer electrolyte 22 is likely to be present around the polymeric fibrous material, and it is possible to help the formation of a proton conduction path.

Specific examples of such a polymeric fibrous material include cellulosic nanofibers, chitin nanofibers, and chitosan nanofibers. The polymeric fibrous material that can be dispersed in water, an alcohol, or the like is suitable.

Examples of the cellulosic nanofibers are cellulose nanofibers having hydroxy groups that are not substituted; cellulose nanofibers having hydroxy groups, at least some of which have been substituted with any of carboxyl groups, acetyl groups or derivatives thereof, and carboxymethyl groups; sulfonated cellulose nanofibers; cellulose sulfate nanofibers; cellulose phosphate nanofibers: and cellulose nanofibers having hydroxy groups, at least some of which have been substituted with C1-C10 alkyl groups or derivatives thereof, and a plurality thereof may be arbitrarily combined together. The cellulosic nanofibers may be cellulosic nanofibers having hydroxy groups that are not substituted.

The shape of the polymeric fibrous material 23 is not particularly limited and may be, for example, a hollow structure or a solid structure. The polymeric fibrous material 23 in the electrode catalyst layer 20 may be only one type of the above-described examples or a combination of two or more types thereof.

The amount of the polymeric fibrous material blended is preferably 1 part by mass or more and 12 parts by mass or less and more preferably 2 parts by mass or more and 10 parts by mass or less relative to 100 parts by mass of the catalyst. In this case, since a structure in which the polymeric fibers intertwine together is suitably formed, the strength of the electrode catalyst layer 20 is further increased, and the generation of cracks can be further suppressed.

In a case where the catalyst 21 is supported on the carrier 21b, the polymeric fibrous material may be within a range of 1 part by mass or more and 20 parts by mass or less based on the carrier 21b in the catalyst 21 (100 parts by mass).

### (Structure of electrode catalyst layer 20)

The electrode catalyst layer 20 has voids V as shown in the structure of the catalyst layer shown in FIG. 2. In the void V, none of the catalyst 21, the polymer electrolyte 22, and the polymeric fibrous material 23 are present.

In addition, in a Voronoi diagram in which the center of gravity of each of the voids V in the cross section of the electrode catalyst layer 20 is regarded as a site, when the standard deviation of the areas of Voronoi regions is indicated by ASD, and the arithmetic average area of the Voronoi regions is indicated by AAV, a dispersity of the areas of the Voronoi regions represented by ASD/AAV satisfies 0.50 or more and 0.90 or less. This dispersity may be 0.55 or more, may be 0.60 or more, may be 0.85 or less, or may be 0.80 or less.

In addition, in a Voronoi diagram in which the center of gravity of each fiber of the polymeric fibrous material 23 in the electrode catalyst layer 20 is regarded as a site, when the standard deviation of the areas of Voronoi regions is indicated by BSD, and the arithmetic average area of the Voronoi regions is indicated by BAV, a dispersity of the areas of the Voronoi regions represented by BSD/BAV is suitably 1.5 or less. This dispersity may be 0.80 or more, may be 0.85 or more, may be 0.90 or more, may be 0.95 or more, may be 1.0 or more, may be 1.1 or more, or may be 1.2 or more.

First, a method for detecting voids and the portions of the polymeric fibrous material in the cross section of the electrode catalyst layer will be described. The voids V and the portions of the polymeric fibrous material in the cross section of the electrode catalyst layer can be detected based on images obtained by observing the cross section of the electrode catalyst layer with a scanning electron microscope (SEM). For example, the voids and the portions of the polymeric fibrous material can be extracted by image processing from SEM-observed images captured from a field of view from which only the electrode catalyst layer is photographed at an observation magnification of approximately 10000 times to 20000 times.

Conditions for acquiring electron microscope images are not particularly limited as long as the acceleration voltage is not high enough to damage the ionomer in the electrode catalyst layer, but the acceleration voltage is, for example, preferably 0.5 kV to 1 kV. In addition, during the capturing, there is a need to adjust the brightness or contrast of the images so that the luminance histogram falls within 0 to 255. In addition, the sizes of voids and the polymeric fibrous material that can be detected depend on the size and magnification of an image to be stored, and the resolution is preferably at least 0.02 µm/px or higher. In order to reduce errors, it is preferable to capture images and perform measurement in the same manner in at least five or more fields of view, preferably, 10 or more fields of view. A method for exposing the cross section of the electrode catalyst layer is not limited as long as the shape of the catalyst layer can be maintained during processing, and it is possible to use a known method, for example, ion milling, ultramicrotome, or the like. The cross section refers to a cross section along the thickness direction.

Next, a method for obtaining the dispersity of the areas of the Voronoi regions in the Voronoi diagram in which the center of gravity of each void V or the polymeric fibrous material 23 is regarded as a site will be described.

"Voronoi diagram" is a diagram in which, by drawing a perpendicular bisector (Voronoi partition line) on each of lines connecting two adjacent cites existing on a plane, and by connecting the perpendicular bisectors to each other, the plane is divided into nearestneighbor regions (Voronoi regions) of the respective cites.

In the present embodiment, the Voronoi diagram is acquired by regarding the centers of gravity of the voids V or the fibers of the polymeric fibrous material 23 in the cross section of the electrode catalyst layer as the sites, respectively. In addition, the dispersity of the areas of the Voronoi regions in which the centers of gravity of the voids are regarded as the sites is defined as ASD/AAV, where ASD indicates the standard deviation of the areas of the Voronoi regions in which the centers of gravity of the voids are regarded as the sites, and AAV indicates the arithmetic average area of the areas of the Voronoi regions in which the centers of gravity of the voids are regarded as the sites, and the dispersity of the areas of the Voronoi regions in which the centers of gravity of the fibers of the polymeric fibrous material is regarded as the sites is defined as BSD/BAV, where BSD indicates the standard deviation of the areas of the Voronoi regions in which the centers of gravity of the fibers of the polymeric fibrous material are regarded as the sites, and BAV indicates the arithmetic average area of the areas of the Voronoi regions in which the centers of gravity of the fibers of the polymeric fibrous material are regarded as the sites. As these dispersity values become smaller, the voids or the fibers of the polymeric fibrous material is spatially distributed in the cross section with higher dispersibility.

In the present specification, the Voronoi diagram is created based on each of the above-described SEM images of at least five fields of view, and the standard deviation and the arithmetic average area are obtained based on the areas of all of the Voronoi regions in each field of view.

In the present embodiment, the proportion of the areas of the voids in the cross section of the electrode catalyst layer, that is, the proportion of the areas of all of the voids in the cross section in the total area of the cross section is 20% or more and 40% or less. This proportion of the areas of the voids may be 22% or more, may be 24% or more, may be 26% or more, or may be 28% or more and may be 38% or less, may be 36% or less, or may be 34% or less.

In the present embodiment, the proportion of the areas of the polymeric fibrous material in the cross section of the electrode catalyst layer, that is, the proportion of the areas of all of the fibrous material in the cross section in the total area of the cross section, may be 2% or more and 15% or less. This proportion of the fibrous material may be 2.5% or more, may be 3.0% or more, may be 4.0% or more, or may be 5.0% or more and may be 14% or less.

When the proportion is within these ranges, the effect of the polymeric fibrous material added can be obtained without increasing resistance.

The proportions of the areas of the voids and the polymeric fibrous material in the cross section of the electrode catalyst layer are calculated based on each of the above-described SEM images of at least five fields of view.

### (Thickness of electrode catalyst layer 20)

The thickness of the electrode catalyst layer is preferably 1 µm or more and 10 µm or less. In a case where the thickness is thicker than 10 µm, cracks are likely to be generated. In addition, in a case where the thickness is thinner than 1 µm, the layer thickness is likely to vary, and a catalytic substance and the polymer electrolyte (ionomer) are likely to be nonuniform. Cracks in the surface of the electrode catalyst layer or the nonuniformity of the thickness and the material adversely affect the durability when the electrode catalyst layer is operated for a long period of time.

The thickness of the electrode catalyst layer 20 can be measured by, for example, observing the cross section of the membrane electrode assembly using a scanning electron microscope (SEM). For example, the thickness of the electrode catalyst layer can be measured by measuring the thickness of the electrode catalyst layer in a field of view where the entire catalyst layer is included at an observation magnification of approximately 1000 times to 10000 times. In order to ascertain the thickness without bias, the thickness is preferably measured in the same manner in at least 20 observation points. As a method for exposing the cross section of the membrane electrode assembly, it is possible to use a known method, for example, ion milling, ultramicrotome, or the like.

### (Shear strength of electrode catalyst layer 20)

The shear strength of the electrode catalyst layer can be 0.08 N/mm or more, and may be 0.09 N/mm or more.

The shear strength of the electrode catalyst layer is a force per unit length observed in a case where a portion up to a depth of 1 µm from the surface of the electrode catalyst layer is cut by moving a diamond blade at a rate of 10 µm/sec in the in-plane direction of the layer. The width of the diamond blade is set to 1 mm, the rake angle is set to 20°, and the clearance angle is set to 10°.

### (Electrode catalyst layer 30)

The electrode catalyst layer 30 is provided to sandwich the polymer electrolyte membrane 10 together with the electrode catalyst layer 20.The electrode catalyst layer 30 is not particularly limited as long as the electrode catalyst layer has a catalyst, but suitably further contains a polymer electrolyte and a fibrous material. As the catalyst, the polymer electrolyte, and the composition ratio, those exemplified in the section of the electrode catalyst layer 20 can be used. The electrode catalyst layer 30 may satisfy the requirements of the electrode catalyst layer 20.

The electrode catalyst layer 30 may contain the catalyst, the polymer electrolyte, and a polymeric fibrous material as in the electrode catalyst layer 20, but may not contain the polymeric fibrous material.

### <Method for manufacturing membrane electrode assembly>

A method for manufacturing the membrane electrode assembly 200 includes an ink preparation step of preparing an ink and an electrode catalyst layer formation step of applying the ink to one surface of the polymer electrolyte membrane 10 to form the electrode catalyst layer 20.

### <Ink preparation step>

In the ink preparation step, a catalyst ink is prepared by mixing the individual constituent components of the electrode catalyst layer 20, that is, the catalyst 21, the polymer electrolyte 22, and the polymeric fibrous material 23 in the presence of a dispersion medium. That is, the ink contains the catalyst, the polymer electrolyte, the polymeric fibrous material, and the dispersion medium.

The dispersion medium of the ink is not particularly limited as long as the dispersion medium does not erode the individual constituent components of the electrode catalyst layer 20 and is capable of dissolving or dispersing, as a fine gel, the polymer electrolyte 22 in a highly fluid state. However, the dispersion medium desirably contains at least a volatile organic solvent. The dispersion medium of the ink may be water, alcohols, ketones, other polar solvents, ether-based solvents, or the like. Specific examples of the alcohols include methanol, ethanol, 1-propanol, 2-propanol, 1-butanol, 2-butanol, isobutyl alcohol, tert-butyl alcohol, and the like. Examples of the ketones include acetone, methyl ethyl ketone, methyl butyl ketone, methyl isobutyl ketone, methyl amyl ketone, pentanone, heptanone, cyclohexanone, methyl cyclohexanone, acetonyl acetone, diethyl ketone, dipropyl ketone, diisobutyl ketone, and the like. Examples of the polar solvents other than water, the alcohols, and the ketones include dimethylformamide, dimethylacetamide, N-methylpyrrolidone, ethylene glycol, diethylene glycol, diacetone alcohol, 1-methoxy-2-propanol, and the like. Examples of the ether-based solvents include tetrahydrofuran, dioxane, diethylene glycol dimethyl ether, anisole, methoxy toluene, dibutyl ether, and the like. In addition, the dispersion medium may be a solvent mixture obtained by mixing two or more of the above-described solvents.

In addition, in a case where a lower alcohol is used as the dispersion medium, it is preferable to use a solvent mixture of the lower alcohol and water from the viewpoint of further suppressing the ignition of the dispersion medium. Furthermore, from the viewpoint of the polymer electrolyte 22 being an ionomer, the dispersion medium preferably contains water that is compatible with ionomers, that is, water having a high affinity to ionomers. The content of water in the dispersion medium is not particularly limited as long as the ionomer does not separate and cause cloudiness or gelation. In a case where the catalyst 21 is supported on the carrier 21a, the ink may contain a dispersant to disperse the catalyst 21 and carrier 21a in the ink. Examples of the dispersant include anionic surfactants, cationic surfactants, amphoteric surfactants, and nonionic surfactants.

The content of the solid content in the ink is preferably 50 mass% or less. In this case, the generation of cracks in the surface of the electrode catalyst layer 20 is further suppressed. From the viewpoint of improving the film formation rate of the electrode catalyst layer 20, the content of the solid content in the ink is more preferably 1 mass% or more and 20% or less.

In the ink preparation step, the individual constituent components of the electrode catalyst layer 20 may be mixed together using the dispersion medium and then subjected to a dispersion treatment as necessary. The polymeric fibrous material may be dispersed in the dispersion medium in advance, then, mixed with other materials, and subjected to a dispersion treatment as necessary. The dispersion treatment is not particularly limited as long as the individual components in the electrode catalyst layer 20 can be dispersed. Examples of such a treatment include a treatment with a planetary ball mill and a roll mill, a treatment with a shear mill, a treatment by wet milling, an ultrasonic dispersion treatment, and a treatment with a homogenizer.

Here, the dispersity of the areas of the Voronoi regions in the Voronoi diagram in which the centers of gravity of voids in the cross section of the electrode catalyst layer are regarded as sites can be adjusted by adjusting the blending ratio of the polymer electrolyte in the electrode catalyst layer of the ink, the blending ratio of the polymeric fibrous material in the electrode catalyst, the solvent composition of the catalyst ink, the dispersion intensity during the adjustment of the catalyst ink, the heating temperature or heating rate of the applied catalyst ink, or the like.

In a case where the polymeric fibrous material contains the functional group capable of forming a hydrogen bond, the polymeric fibrous material is capable of forming a stable three-dimensional network structure by the hydrogen bond in addition to the physical fiber intertwining. Therefore, cracking in the dried electrode catalyst layer can be suppressed, whereby the dispersion stability of the catalyst in the ink is excellent, and the flow of the applied ink can also be suppressed, and the uniformity of the thicknesses of a coating film and the dried electrode catalyst layer or the uniformity of the amount of the catalyst supported thus becomes excellent.

In the case of being measured with a cone-plate viscometer (rheometer) at 23°C, the viscosity of the ink at a shear rate of 1 /s is preferably 500 to 5000 mPa·s. In this case, the dispersion of the catalyst in the ink is particularly stabilized, and it is possible to further suppress variation in thickness and the amount of the catalyst supported. In addition, the ink levels to an appropriate extent, which contributes to the flatness of the electrode catalyst layer.

### <Electrode catalyst layer formation step>

In the electrode catalyst layer formation step, the ink obtained in the ink preparation step is applied to one surface of the polymer electrolyte membrane 10, and a drying treatment for volatilizing the dispersion medium is then performed, thereby forming the electrode catalyst layer 20.

At this time, the electrode catalyst layer 20 is formed directly on the surface of the polymer electrolyte membrane 10.Therefore, the adhesion between the polymer electrolyte membrane 10 and the electrode catalyst layer 20 is enhanced. In addition, since no pressurization is required to join the electrode catalyst layer 20, collapsing of the electrode catalyst layer 20 is also suppressed.

Since the polymer electrolyte membrane 10 generally swells and shrinks to a large extent, when the ink is applied onto the polymer electrolyte membrane 10, the volume change of the polymer electrolyte membrane 10 is large compared with that in a case where the ink is applied onto a support substrate to form the electrode catalyst layer 20, and the electrode catalyst layer 20 is then transferred to the polymer electrolyte membrane 10.Therefore, in a case where the ink does not contain the polymeric fibrous material 23, cracks are likely to be generated in the electrode catalyst layer 20.In contrast, in a case when the ink contains the polymeric fibrous material 23, even in a case where the ink is directly applied onto the polymer electrolyte membrane 10, and the volume of the polymer electrolyte membrane 10 thereby changes significantly, the generation of cracks in the electrode catalyst layer 20 can be suppressed by the ink containing the polymeric fibrous material 23.

A method for applying the ink is not particularly limited, and various application methods can be used. As the application method, from the viewpoint of applying the ink onto the surface of the polymer electrolyte membrane 10 in a uniform film thickness, for example, a doctor blade method, a die coating method, a curtain coating method, a dipping method, a spray coating method, a screen printing method, a roll coating method can be preferably used.

A drying method used in the drying treatment is not particularly limited as long as the dispersion medium can be volatilized by the method, and it is possible to use methods in which an oven, a hot plate, warm air drying, or far-infrared radiation is used. In addition, the drying temperature and the drying time in the drying treatment can be selected as appropriate depending on the constituent materials of the ink. The drying temperature of the ink may be, for example, within a range of 40°C or higher and 200°C or lower and is preferably within a range of 40°C or higher and 120°C or lower. The drying time of the ink may be, for example, within a range of 0.5 minutes or longer and one hour or shorter and is preferably within a range of one minute or longer and 30 minutes or shorter.

Instead of forming the electrode catalyst layer 20 by applying the ink to the surface of the polymer electrolyte membrane 10 and then performing the drying process for volatilizing the dispersion medium, the electrode catalyst layer 20 may be formed by applying the ink to the surface of a support substrate different from the polymer electrolyte membrane 10, then, performing a drying treatment for volatilizing the dispersion medium, next, joining the electrode catalyst layer 20 to the polymer electrolyte membrane 10, and then performing a transfer treatment for peeling off the support substrate.

A material having favorable transferability may be used as the support substrate, and for example, a fluorine-based resin can be used. Examples of the fluorine-based resin include ethylenetetrafluoroethylene copolymers (ETFE), tetrafluoroethylenehexafluoropropylene copolymers (FEP), tetrafluoro perfluoroalkyl vinyl ether copolymers (PFA), polytetrafluoroethylene (PTFE), and the like. In addition, as the substrate, it is possible to use organic polymer compounds other than the fluorine-based resins such as polyimide, polyethylene terephthalate, polyamide (nylon (registered trademark)), polysulfone, polyethersulfone, polyphenylene sulfide, polyether/ether ketone, polyetherimide, polyarylate, and polyethylene naphthalate. The substrate may be in any form of a sheet or film.

As the above-described transfer treatment, for example, a transfer method by thermo-compression can be used.

After the formation of the electrode catalyst layer 20, the electrode catalyst layer 30 may be formed in the same manner.

### <Water electrolysis device and organic hydride electrolytic synthesis device>

One embodiment of a water electrolysis device and organic hydride electrolytic synthesis device of the present disclosure will be described with reference to FIG. 4. FIG. 4 is a cross-sectional view showing one embodiment of a water electrolysis device or organic hydride electrolytic synthesis device 300 of the present disclosure.

As shown in FIG. 4, the water electrolysis device or organic hydride electrolytic synthesis device 300 of the present embodiment includes the membrane electrode assembly 200, an anode-side current collector 310 and a cathode-side current collector 320 provided to sandwich the membrane electrode assembly 200, and a DC power supply (not shown) electrically connected to the anode-side current collector 310 and the cathode-side current collector 320.

The anode-side current collector 310 is connected to the DC power supply to serve as an anode, and the anode-side current collector 310 is joined to the electrode catalyst layer 20 of the membrane electrode assembly 200.The cathode-side current collector 320 is connected to the DC power supply to serve as a cathode, and the cathode-side current collector 320 is joined to the electrode catalyst layer 30 of the membrane electrode assembly 200.

As the current collectors, any conductive materials can be used. Specific examples thereof include carbon paper, carbon non-woven fabrics, oxide or metal plates, and the like. Examples of the metal plates include titanium sintered bodies. As the carbon paper, water-repellent carbon paper may be used, and as the oxide or metal plates, precious metal-plated plates may be used. The current collectors may be porous bodies and may have a channel for supplying or discharging gas or liquid. The current collectors may function as a separator that holds liquid and gas that is supplied to or is generated and discharged from the cathode side and the anode side.

In the case of the water electrolysis device, when water and voltage are supplied, in the case of a proton exchange membrane type, oxygen and protons are generated from water in the electrode catalyst layer on the anode side and the generated protons are converted to hydrogen in the electrode catalyst layer on the cathode side, and in the case of an anion exchange membrane type, hydrogen and hydroxide ions are generated from water in the electrode catalyst layer on the cathode side, and the generated hydroxide ions are converted to oxygen and water in the electrode catalyst layer on the anode side. As the water, water such as ultrapure water can be used.

In addition, in the case of the organic hydride electrolytic synthesis device, when water, an organic substance such as toluene, and voltage are supplied, oxygen and protons are generated from water in the electrode catalyst layer on the anode side, and the generated protons are converted to an organic hydride such as methylcyclohexane by hydrogenating the organic substance in the electrode catalyst layer on the cathode side.

Since the water electrolysis device and organic hydride electrolytic synthesis device 300 include the above-described membrane electrode assembly 200, the generation of cracks in the electrode catalyst layer 20 is suppressed in the membrane electrode assembly 200. Therefore, when voltage is applied between the pair of cathode-side current collector 320 and anode-side current collector 310 from the power supply in a state where water has been supplied to the electrode catalyst layer 20 on the cathode side, the disturbance of the potential distribution in the electrode catalyst layer 20 of the membrane electrode assembly 200 is suppressed, degradation of the water electrolysis performance can be suppressed, and the durability improves.

In the water electrolysis device and organic hydride electrolytic synthesis device 300 of the present disclosure, the electrode catalyst layer 20 is provided on the anode side, but may also be provided on the cathode side, and may be provided on both the anode side and the cathode side.

### (Action effect)

According to the present embodiment, since the proportion of the areas of the voids in the cross section of the electrode catalyst layer 20 is as relatively large as 20% to 40%, resistance to the mass transport of reactants and a product becomes small, whereby the electrolysis voltage can be lowered.

Furthermore, since the electrode catalyst layer contains the polymeric fibrous material, in the Voronoi diagram in which the center of gravity of each void in the cross section of the electrode catalyst layer is regarded as a site, the dispersity ASD/AAV of the areas of the Voronoi regions has reached a specific low value, and the structure of the electrode catalyst layer is highly uniform, it is considered that the electrode catalyst layer is capable of exhibiting a high strength, and cracks can be suppressed even when the proportion of the areas of the voids in the cross section of the electrode catalyst layer is as relatively large as 20% to 40%.

In addition, since the dispersity ASD/AAV of the areas of the Voronoi regions in which the center of gravity of the void is regarded as the site has a specific low value, and the voids are spatially distributed in the cross section of the electrode catalyst layer with high dispersibility, which is thought to make it possible to efficiently use the volume of the electrode catalyst layer and lower the electrolysis voltage.

In addition, according to the electrode catalyst layer, it is also possible to improve the adhesion between the polymer electrolyte membrane and the electrode catalyst layer. Therefore, the generation of voids due to peeling of the polymer electrolyte membrane and the electrode catalyst layer can be suppressed, and an increase in resistance of the electrode catalyst layer arising from these voids can be further suppressed. According to what has been described above, the membrane electrode assembly including the electrode catalyst layer makes it possible to further suppress the degradation of electrolysis performance.

The reason for the electrode catalyst layer capable of improving the adhesion between the polymer electrolyte membrane and the electrode catalyst layer can be considered as follows. That is, it is considered that the adhesion between the polymer electrolyte membrane and the electrode catalyst layer can be improved by the electrode catalyst layer because the stress applied to the electrode catalyst layer is effectively dispersed by the polymeric fibrous material, and the shear force at the interface between the electrode catalyst layer and the polymer electrolyte membrane can be reduced.

In addition, in a case where the polymeric fibrous material has a functional group capable of forming a hydrogen bond, even when excessive stress is applied to the electrode catalyst layer due to the shrinkage of the electrolyte catalyst layer, which is caused by the swelling of the polymer electrolyte membrane due to moisture infiltration and the following shrinkage of the electrolyte membrane due to moisture discharge during the drying of the electrolyte membrane at the time of forming the electrode catalyst layer by applying the ink onto one surface of the polymer electrolyte membrane, the stress is dispersed by the polymeric fibrous material having a three-dimensional network structure in the electrode catalyst layer. Therefore, it is considered that the generation of cracks in the electrode catalyst layer is further suppressed.

In addition, in this case, the fibers of the polymeric fibrous material may have a three-dimensional network structure in the ink and in the electrode catalyst layer due to the hydrogen bond and fiber intertwining. Additionally, when voltage is applied to the electrode catalyst layer for water electrolysis or organic hydride electrolytic synthesis, there is a case where a portion in which stress becomes locally excessive due to oxygen gas, hydrogen gas, or the like generated in the electrode catalyst layer is formed. Even in such a case, such excessive stress is dispersed by the polymeric fibrous material having a three-dimensional network structure included in the electrode catalyst layer. Therefore, it is considered that the generation of cracks in the electrode catalyst layer is suppressed. In addition, the addition of the polymeric fibrous material often increases the ink viscosity; however, when the TI (thixotropic index) value is high, actually, the apparent viscosity decreases due to a shear force during application with a die head or the like, the coated surface becomes favorable, and when the shear is no longer applied afterwards, the viscosity returns to be high, which significantly contributes to preventing the dripping of the coated surface and stabilizing the coated surface.

In addition, in a case where the electrode catalyst layer contains the polymeric fibrous material having a functional group capable of forming a hydrogen bond as described above, it is considered that the polymeric fibrous material may have a three-dimensional network structure due to the hydrogen bond and fiber intertwining even in the ink before the electrode catalyst layer is formed and the catalyst ink thickens. Therefore, the dispersion of catalyst particles in the ink is stabilized, and the sedimentation of the catalyst in the ink is suppressed for a long period of time. Therefore, it is considered that it is possible to suppress a change over time in the content of the catalyst in the ink to be applied, variation in the amount of the catalyst supported in the electrode catalyst layer is reduced, and cracks in the electrode catalyst layer accompanied by the variations in the amount of the catalyst supported are also suppressed.

Furthermore, in a case where it is possible for the hydrogen-bonding functional group of the polymeric fibrous material 23 and the oxygen atom or the like in the proton-conductive functional group or the N atom, the H atom, or the like in the anion-conductive functional group of the polymer electrolyte 22 to bond to each other with a hydrogen bond, the polymer electrolyte 22 is likely to be present around the polymeric fibrous material 23, and it is possible to help the formation of a proton conduction path.

### (Example of second embodiment)

Hereinafter, the contents of the second embodiment will be more specifically described using examples, but the present disclosure is not limited to the following examples.

### (Evaluation of number of cracks)

In the following examples, as a method for determining the quantity of cracks, the contrast value by transmitted light was measured. When transmitted light is transmitted from the rear side of a laminate, since a larger amount of light penetrates defective portions such as cracks or pinholes, the contrast between black portions and portions that appear white due to the transmitted light can be used to determine the quantity of cracks. In the present examples, in a case where the contrast value (the number of black pixels/the number of white pixels) in an image of transmitted light exceeds 10³, the number of cracks was determined to be "large," and in a case where the contrast value is less than 10³, the number of cracks was determined to be "small."

### (Measurement of shear strength of electrode catalyst layer)

In the following examples, as a method for measuring the shear strength of the catalyst layer, the shear strength was measured using a surface/interface property analyzer. For the measurement, SAICAS DN type (manufactured by Daipla Wintes Co., Ltd.) was used, and a diamond blade (width: 1 mm, rake angle: 20°, clearance angle: 10°) was used.
Horizontal rate: 10 µm/sec
Cutting depth: 1 µm

### (Analysis of cross-sectional structure of electrode catalyst layer)

The cross section was exposed using Cryo-Cross-section Polisher (JEOL Ltd.), and a scanning electron microscope SU8010 (Hitachi High-Tech Corporation) was used as the electron microscope.

The sizes of images to be analyzed need to be standardized, and analysis was performed using images at a magnification of 20000x, and a size of 1280 x 960 pixels. Voids were extracted using the Trainable Weka Segmentation function in ImageJ Fiji, which is free software widely used for processing or analysis of electron microscope images. In the present embodiment, a void in the cross section of the electrode catalyst layer refers to a region where none of the catalyst, the conductive carrier, the polymer electrolyte, and the polymeric fibrous material is present; however, in the extraction of voids, portions where the outermost surface of the cross section was a void, and the depth thereof is deeper than a depth corresponding to one primary particle diameter of the catalyst particle were extracted as voids. In a case where the depth of the void was equal to or less than one primary particle diameter of the catalyst particle, the void was not regarded as a void. Specifically, catalyst regions, polymer electrolyte regions, polymeric fibrous material regions, and void regions were labelled at 15 or more places each, and then segmentation was performed.

Table 1 shows dispersity by a Voronoi tessellation method in which voids are regarded as sites, dispersity by the Voronoi tessellation method in which the polymeric fibrous material is regarded as sites, the proportion of voids in the cross section of the electrode catalyst layer, the proportion of the polymeric fibrous material in the cross section of the electrode catalyst layer, and the results of power generation performance evaluation.

### (Water electrolysis performance evaluation)

In the following examples, as a method for evaluating the water electrolysis performance of the membrane electrode assembly, I-V measurement was performed by the following procedure. Pt-plated Ti meshes were incorporated as power feeders into both surfaces of the membrane electrode assembly and used as an electrolytic cell for evaluation. Voltage was measured when the current density was applied stepwise from 0 to 3 A/cm² at 50°C and the voltage at 2.0 A/cm² was examined. The voltage is suitably less than 1.90 V.

### (Example 1)

First, a catalyst powder composed of iridium oxide (product number "TEC77100," manufactured by Tanaka Kikinzoku Kogyo K.K.) as a catalyst, a dispersion liquid containing NAFION (registered trademark) as a polymer electrolyte (trade name "NAFION (registered trademark) DE2020," manufactured by FUJIFILM Wako Pure Chemical Corporation), and cellulose nanofibers (trade name "BiNFi-s IMa 10002 Extreme Length," manufactured by Sugino Machine Limited Co., Ltd.) as a polymeric fibrous material were mixed together in a solvent and dispersed with a planetary ball mill for 60 minutes to prepare a catalyst ink. As a solvent of the catalyst ink, a solvent mixture of ultrapure water and 1-propanol was used. The volume ratio between ultrapure water and 1-propanol was set to 30:70.At this time, the catalyst ink was adjusted so that the content of the solid content in the catalyst ink reached 10 mass%. In addition, the amount of the polymeric fibrous material blended was set to 2.5 parts by mass relative to 100 parts by mass of the catalyst. The polymeric fibrous material was confirmed to have an average fiber diameter of 10 nm and an average fiber length of 6 µm. The amount of the polymer electrolyte blended was set to 30 parts by mass relative to 100 parts by mass of the catalyst.

As a polymer electrolyte membrane, a NAFION (registered trademark) membrane (trade name "N117," DuPont de Nemours, Inc.) were prepared.

Next, the catalyst ink was applied to one main surface of the polymer electrolyte membrane using a slit die coater by a die coating method so that the amount of iridium oxide supported reached 0.5 mg/cm² per area of the main surface. In addition, a drying treatment was performed in an oven at 80°C to remove the solvent component in the catalyst ink, and a laminate of an electrode catalyst layer and the polymer electrolyte membrane was obtained. The thickness of the electrode catalyst layer was 10 µm.

As a result of observing the obtained laminate, the number of cracks in the electrode catalyst layer of Example 1 was "small." In addition, in the laminate, the electrode catalyst layer peeled from the polymer electrolyte membrane was not observed. The shear strength of the electrode catalyst layer of the obtained laminate was measured by the above-described method and found out to be 0.08 N/mm.

The electrode catalyst layer was laminated on the rear surface of the obtained laminate as a cathode by the following procedure. Pt-supported carbon particles (product number "TEC10E50E," Tanaka Kikinzoku Kogyo K.K.) as a catalyst and a dispersion liquid containing NAFION (registered trademark) as a polymer electrolyte (trade name "NAFION (registered trademark) DE2020," manufactured by FUJIFILM Wako Pure Chemical Corporation) were mixed together in a solvent and dispersed with a planetary ball mill for 60 minutes to prepare a cathode catalyst ink. As a solvent of the catalyst ink, a solvent mixture of ultrapure water and 1-propanol was used. The volume ratio between ultrapure water and 1-propanol was set to 30:70.The cathode catalyst ink was applied to a surface of the laminate on which the electrode catalyst layer was not provided using the slit die coater by the die coating method so that the amount of Pt supported reached 0.5 mg/cm² per area of the main surface. In addition, a drying treatment was performed in the oven at 80°C to remove the solvent component in the catalyst ink, and a laminate of an electrode catalyst layer and the polymer electrolyte membrane was obtained. The electrolysis performance of the membrane electrode assembly thus obtained was evaluated by the method described above. The electrolysis voltage at 2.0 A/cm² was 1.85 V.

### (Example 2)

Example 2 was the same as Example 1 except the following fact. The amount of the polymeric fibrous material blended was set to 5 parts by mass relative to 100 parts by mass of the catalyst.

As a result of observing the obtained laminate, the number of cracks in the electrode catalyst layer of Example 2 was "small." In addition, in the laminate, peeling of the electrode catalyst layer from the polymer electrolyte membrane was not observed. The shear rate strength of the electrode catalyst layer of the obtained laminate was measured by the above-described method and found out to be 0.10 N/mm. The electrolysis voltage at 2.0 A/cm² was 1.87 V.

### (Example 3)

Example 3 was the same as Example 1 except the following fact. The amount of the fibrous material blended was set to 10 mass% relative to 100 mass% of the catalyst.

As a result of observing the obtained laminate, the number of cracks in the electrode catalyst layer of Example 3 was "small." In addition, in the laminate, peeling of the electrode catalyst layer from the polymer electrolyte membrane was not observed. The shear rate strength of the electrode catalyst layer of the obtained laminate was measured by the above-described method and found out to be 0.10 N/mm. The electrolysis voltage at 2.0 A/cm² was 1.87 V.

### (Comparative Example 1)

A catalyst ink and a laminate of an electrode catalyst layer and an electrolyte membrane were obtained by the same procedure as in Example 1 except that the polymeric fibrous material was not contained. As a result of observing the obtained laminate, the number of cracks in the electrode catalyst layer of Comparative Example 1 was "large." In addition, in the laminate, peeling of the electrode catalyst layer from the polymer electrolyte membrane was observed. The shear strength of the electrode catalyst layer of the obtained laminate was measured and found out to be 0.04 N/mm. The electrolysis voltage at 2.0 A/cm² was 1.94 V.

### (Comparative Example 2)

A catalyst ink was obtained by the same procedure as in Example 1 except that the amount of the polymeric fibrous material blended was set to 15 parts by mass relative to 100 parts by mass of the catalyst. The viscosity was high, coating of the electrolyte membrane with the ink as a film having a uniform thickness was difficult, and it was not possible to obtain an electrode catalyst layer.

### (Comparative Example 3)

A catalyst ink and a laminate of an electrode catalyst layer and an electrolyte membrane were obtained by the same procedure as in Example 2 except that the dispersion conditions were set to be mild by setting the rotation speed in the dispersion treatment to be lower and the dispersion treatment time to be shorter compared with those in Example 2. As a result of observing the obtained laminate, the number of cracks in the electrode catalyst layer of Comparative Example 3 was "small." In addition, in the laminate, peeling of the electrode catalyst layer from the polymer electrolyte membrane was observed. The shear strength of the electrode catalyst layer of the obtained laminate was measured and found out to be 0.08 N/mm. The electrolysis voltage at 2.0 A/cm² was 1.91 V.

### (Comparative Example 4)

A catalyst ink and a laminate of an electrode catalyst layer and an electrolyte membrane were obtained by the same procedure as in Example 1 except that polybenzimidazole polymeric fibers having no hydroxy groups and having a fiber diameter of 200 nm (fiber diameter: 200 nm, fiber length: 15 µm) were used as the polymeric fibrous material.

As a result of observing the obtained laminate, the number of cracks in the electrode catalyst layer of Comparative Example 4 was "large." In addition, in the laminate, partial peeling of the electrode catalyst layer from the polymer electrolyte membrane was observed. The shear strength of the electrode catalyst layer of the obtained laminate was measured and found out to be 0.05 N/mm. The electrolysis voltage at 2.0 A/cm² was 1.93 V.

The Voronoi dispersity for which voids in the cross section of the electrode catalyst layer in each of the examples and the comparative examples were regarded as sites, the Voronoi dispersity for which the polymeric fibrous material was regarded as a site, the proportion of the voids in the cross section, the proportion of the polymeric fibrous material in the cross section, and the evaluation results became as shown in Table 2.

**[Table 2]**

| Table 2 | Polymeric fibrous material | Proportion of fibrous material relative to 100 parts by mass of catalyst [parts by mass] | Fiber diameter | Fiber length | Voronoi dispersity for which void is regarded as site ASD/AA V | Voronoi dispersity for which fibrous material is regarded as site BSD/BA V | Proportion of void in cross section of electrode catalyst layer (%) | Proportion of fibrous material in cross section of electrode catalyst layer (%) | Quantity of cracks in electrode catalyst layer | Shear strength at depth of 1 µm of electrode catalyst layer [N/mm] | Electrolysis voltage at 2.0 A/cm² [V] |
|---|---|---|---|---|---|---|---|---|---|---|---|
| | | | [nm] | [µm] | | | | | | | |
| Example 1 | Cellulose nanofiber | 2.5 | 10 | 6 | 0.54 | 1.12 | 28 | 3.2 | Small | 0.08 | 1.85 |
| Example 2 | | 5 | 10 | 6 | 0.62 | 1.24 | 32 | 7.8 | Small | 0.10 | 1.87 |
| Example 3 | | 10 | 10 | 6 | 0.80 | 1.32 | 29 | 13.6 | Small | 0.10 | 1.87 |
| Comparative Example 1 | None | 0 | - | - | 0.61 | - | 24 | 0 | Large | 0.04 | 1.94 |
| Comparative Example 2 | Cellulose nanofiber | 15 | 10 | 6 | - | - | - | - | - | - | - |
| Comparative Example 3 | Cellulose nanofiber | 5 | 10 | 6 | 1.31 | 1.34 | 30 | 7.4 | Small | 0.08 | 1.91 |
| Comparative Example 4 | Polybenzimidazole fiber | 5 | 200 | 15 | 1.05 | 0.60 | 26 | 1.5 | Large | 0.05 | 1.93 |

### Reference Signs List

10...Polymer electrolyte membrane, 20...electrode catalyst layer, 21...catalyst, 21a...carrier, 22...polymer electrolyte, 23...polymeric fibrous material, 30 ...electrode catalyst layer, 200...membrane electrode assembly, 300...water electrolysis device or organic hydride electrolytic synthesis device.

## Claims

1. An electrode catalyst layer for water electrolysis or organic hydride electrolytic synthesis, comprising:
a catalyst;
a proton-conductive or anion-conductive polymer electrolyte; and
a polymeric fibrous material having a functional group capable of forming a hydrogen bond.

2. The electrode catalyst layer according to claim 1, wherein the polymeric fibrous material contains the functional group capable of forming a hydrogen bond in a repeating unit.

3. The electrode catalyst layer according to claim 1 or 2, wherein the functional group capable of forming a hydrogen bond is a hydroxyl group and/or a N-H bond.

4. The electrode catalyst layer according to claim 1 or 2, wherein the polymeric fibrous material is a cellulose-based nanofiber.

5. The electrode catalyst layer according to claim 1 or 2, wherein the specific gravity of the catalyst is 5 or more.

6. The electrode catalyst layer according to claim 1 or 2, wherein the polymeric fibrous material has an average fiber diameter of 3 to 20 nm.

7. The electrode catalyst layer according to claim 1 or 2, wherein a content of the polymeric fibrous material is 1 to 12 parts by mass relative to 100 parts by mass of the catalyst.

8. The electrode catalyst layer according to claim 1 or 2, wherein the electrode catalyst layer has a shear strength of 0.08 N/mm or more.

9. An ink for forming an electrode catalyst layer for water electrolysis or organic hydride electrolytic synthesis, comprising:
a catalyst;
a proton-conductive or anion-conductive polymer electrolyte; and
a polymeric fibrous material having a functional group capable of forming a hydrogen bond.

10. The ink according to claim 9, wherein the polymeric fibrous material contains the functional group capable of forming a hydrogen bond in a repeating unit.

11. The ink according to claim 9 or 10, wherein the functional group capable of forming a hydrogen bond is a hydroxyl group and/or a N-H bond.

12. The ink according to claim 9 or 10, wherein the specific gravity of the catalyst is 5 or more.

13. The ink according to claim 9 or 10, wherein a viscosity at a shear rate of 1 s⁻¹ measured with a rheometer is 500 to 5000 mPa·s.

14. The ink according to claim 9 or 10, wherein a viscosity at a shear rate of 1 s⁻¹ is 30 to 12000 mPa·s, and a TI value defined by (the viscosity at the shear rate of 1 s⁻¹)/(a viscosity at a shear rate of 1000 s⁻¹) is 2.0 to 100 (-).

15. A membrane electrode assembly for water electrolysis or organic hydride electrolytic synthesis, comprising:
a polymer electrolyte membrane; and
an electrode catalyst layer disposed on one side or both sides of the polymer electrolyte membrane,
wherein the electrode catalyst layer is the electrode catalyst layer according to claim 1 or 2.

16. The membrane electrode assembly according to claim 15, wherein the electrode catalyst layer is the electrode catalyst layer according to claim 8.

17. A water electrolysis device, comprising:
a membrane electrode assembly having a polymer electrolyte membrane and a pair of electrode catalyst layers disposed on both sides of the polymer electrolyte membrane, respectively; and
a pair of current collectors provided to sandwich the membrane electrode assembly,
wherein at least one of the pair of electrode catalyst layers is the electrode catalyst layer according to claim 1 or 2.

18. An organic hydride electrolytic synthesis device, comprising:
a membrane electrode assembly having a polymer electrolyte membrane and a pair of electrode catalyst layers disposed on both sides of the polymer electrolyte membrane, respectively; and
a pair of current collectors provided to sandwich the membrane electrode assembly,
wherein at least one of the pair of electrode catalyst layers is the electrode catalyst layer according to claim 1 or 2.

19. An electrode catalyst layer, comprising:
a catalyst;
a proton-conductive or anion-conductive polymer electrolyte; and
a polymeric fibrous material,
wherein a proportion of an area of voids in a cross section of the electrode catalyst layer is 20% or more and 40% or less, and
in a Voronoi diagram in which the center of gravity of each void in the cross section of the electrode catalyst layer is regarded as a site, when a standard deviation of areas of Voronoi regions is indicated by ASD, and an arithmetic average area of the Voronoi regions is indicated by AAV, a dispersity of the areas of the Voronoi regions represented by ASD/AAV is 0.50 or more and 0.90 or less.

20. The electrode catalyst layer according to claim 19, wherein in the cross section of the electrode catalyst layer, in a Voronoi diagram in which the centers of gravity of the fibers of the polymeric fibrous material are regarded as sites, when a standard deviation of areas of Voronoi regions is indicated by BSD, and an arithmetic average area of the Voronoi regions is indicated by BAV, a dispersity of the areas of the Voronoi regions represented by BSD/BAV is 1.5 or less.

21. The electrode catalyst layer according to claim 19 or 20, wherein in the cross section of the electrode catalyst layer, a proportion of an area of the polymeric fibrous material is 2% or more and 15% or less.

22. The electrode catalyst layer according to claim 19 or 20, wherein the average fiber diameter of the polymeric fibrous material is 3 to 20 nm.

23. The electrode catalyst layer according to claim 19 or 20, wherein a content of the polymeric fibrous material is 10 parts by mass or less relative to 100 parts by mass of the catalyst.

24. The electrode catalyst layer according to claim 19 or 20, wherein the polymeric fibrous material has a hydrogen-bonding functional group.

25. The electrode catalyst layer according to claim 19 or 20, wherein the polymeric fibrous material has a hydrogen-bonding functional group in a repeating unit.

26. The electrode catalyst layer according to claim 19 or 20, wherein the polymeric fibrous material is a cellulose-based nanofiber.

27. The electrode catalyst layer according to claim 19 or 20, wherein the electrode catalyst layer has a shear strength of 0.08 N/mm or more.

28. The electrode catalyst layer according to claim 19 or 20, wherein the electrode catalyst layer is for water electrolysis or organic hydride electrolytic synthesis.

29. A membrane electrode assembly for water electrolysis or organic hydride electrolytic synthesis, comprising:
an electrolyte membrane; and
the electrode catalyst layer according to claim 19 or 20 disposed on one side or both sides of the electrolyte membrane.

30. A water electrolysis device, comprising:
a membrane electrode assembly having a polymer electrolyte membrane and a pair of electrode catalyst layers disposed on both sides of the polymer electrolyte membrane, respectively; and
a pair of current collectors provided to sandwich the membrane electrode assembly,
wherein at least one of the pair of electrode catalyst layers is the electrode catalyst layer according to claim 19 or 20.

31. An organic hydride electrolytic synthesis device, comprising:
a membrane electrode assembly having a polymer electrolyte membrane and a pair of electrode catalyst layers disposed on both sides of the polymer electrolyte membrane, respectively; and
a pair of current collectors provided to sandwich the membrane electrode assembly,
wherein at least one of the pair of electrode catalyst layers is the electrode catalyst layer according to claim 19 or 20.
